# EUROPEAN PATENT APPLICATION

(11) **EP 2 412 734 A1**
(43) Date of publication of application: **01.02.2012**
(21) Application number: 10755856.1
(22) Date of filing: 09.03.2010
(51) Int. Cl.: C08F 28/06, B29C 39/02, B29C 39/38, G02B 1/04, G02B 3/00

(54) **CURABLE RESIN COMPOSITION FOR CEMENTED LENSES, IMAGE PICK-UP LENS, AND PROCESS FOR PRODUCITON OF IMAGE PICK-UP LENS**

(30) Priority: 23.03.2009 JP 2009069932; 23.03.2009 JP 2009069936
(71) Applicant: FUJIFILM Corporation, Tokyo 106-0031 (JP)
(72) Inventor: YAMADA, Satoru, Haibara-gun, Shizuoka (JP)
(74) Representative: HOFFMANN EITLE
(86) International application number: PCT/JP2010/053921
(87) International publication number: WO 2010/110055

(57) **Abstract**

A curable resin composition for a cemented lens capable of manufacturing a cemented lens excellent in heat resistance in reflowing treatment at a temperature of 260°C or higher and adhesion between lenses, and capable of reducing manufacturing costs of lenses and capable of lightening lenses, is provided.

The curable resin composition for a cemented lens includes:
(a) a compound represented by the following formula (I); and
(b) a radical polymerization initiator. 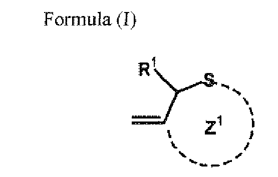 wherein R¹ represents a hydrogen atom or an alkyl group; and Z¹ represents a cyclic structure together with two carbon atoms and a sulfur atom.

## Description

### Technical Field

The present invention relates to a curable resin composition for a cemented lens, an imaging lens, and a method for manufacturing an imaging lens.

### Background Art

Portable telephones having a built-in digital camera have been widely used in recent years. In the manufacture of such portable telephones, reflowing treatment is used in many cases in connecting optical elements and electronic parts with a wiring substrate for the purpose of suppressing mounting costs. Therefore, an imaging lens attached to a portable telephone is required to have heat resistance to an extent not to be deformed by heat in the reflowing treatment.

As such an imaging lens, a lens having a cemented compound lens including a first lens formed from a curable resin material, a second lens formed from an optical glass material having a high softening temperature, and a third lens formed from a curable resin material arrayed in this order from the object side to the image side, and each lens being adhered to each other with an adhesive are known (refer to patent documents I to 3).

Patent documents 1 to 3 describe that it is possible to provide imaging lenses securing heat resistance which are free from deterioration of optical performance under a high temperature thermal environment in a reflowing process, and even in a case of being loaded on a portable telephone and the like and being put in an environment temporarily coming to a high temperature environment such as in a car. Patent documents 1 to 3 recommend that silicone resins having transparency and high hardness are preferred as the curable resin materials for use for the first and third lenses.

Also, in recent years, a technique of manufacturing in the first place a cemented body of lenses and a wafer by adhering a number of lenses on a wafer, and then cutting the cemented body by die cutting, whereby a number of optical parts each including a cemented body including one lens and a wafer are manufactured at one time, is known. According to such a technique, an assembling process in manufacturing a plenty of optical parts is sharply simplified (hereinafter a lens manufactured by this technique is also referred to as "a wafer level lens" in the specification).

For example, patent document 4 discloses a technique of arranging a deformable copying material in each of a number of pits provided on the first substrate, pressing the copying jig having copying parts capable of entering into the pits of the first substrate and having the shapes corresponding to the shapes of lenses against the first substrate, and curing the copying material to form a plenty of lenses at the same time on the first substrate. Patent document 4 discloses UV-curable epoxy resin as the deformable copying material. Such a method of transferring the shape of the copying part in a copying jig to a copying material and obtaining an optical member of a desired shape is known as an imprinting method.

### Documents in Background Art

### Patent Documents

Patent Document 1: JP-A-2008-287005
Patent Document 2: JP-A-2008-287006
Patent Document 3: JP-A-2008-287007
Patent Document 4: U.S. Patent Application 2008/0230934
Patent Document 5: Japanese Patent No. 3299542
Patent Document 6: Japanese Patent No. 4153031

### Non-Patent Documents

Non-Patent Document 1: Macromolecules, 1994,27,7935
Non-Patent Document 2: Macromolecules, 1996,29,6983
Non-Patent Document 3: Macromolecules, 2000,33,6722
Non-Patent Document 4: J. Polym. Sci., Part A Polym, Chem., 2001, 39, 202

### Summary of the Invention

### Problems that the Invention Is to Solve

Thermoplastic resins such as acrylic resins and polycarbonate have been conventionally used as lens materials, and an optical element containing a lens is soldered on a wiring substrate. However, since the melting temperature of lead-free solders that are frequently used in recent years is high as compared with that of conventional solders, the temperature of reflowing treatment is generally 260°C or higher. When reflowing treatment is performed at such a temperature, there are problems such that lenses using conventional thermoplastic resins cause deformation, or malfunctions such as yellowing are liable to occur due to high temperature. Further, even when transparent high hardness silicone resins as used in patent documents 1 to 3 are used, it is insufficient to solve the above problems in reflowing treatment of 260°C or higher. Further, transparent high hardness silicone resins are low in adhesion to optical glass materials and particularly in the case where cemented compound lenses as described in patent documents 1 to 3 are manufactured, adhesives are necessary for adhering lenses to each other, and there arises another problem that the manufacturing cost of imaging lenses increases.

In addition, lenses formed with the transparent high hardness silicone resins as used in patent documents I to 3 and UV-curable epoxy resins as disclosed in patent document 4 are low in refractive indices, accordingly reduction of the manufacturing costs of lenses and reduction of the amounts of resins for the purpose of lightening of lenses are difficult for the reason that desired lens performance is hard to obtain.

Cyclic allylsulfide monomers are disclosed in non-patent documents I to 4 and patent documents 5 and 6. Patent documents 5 and 6 describe that such monomers can be used to make shrinking between polymerizations least, so that they can be applied to optical lenses. However, such cemented compound lenses as described above and wafer level lenses are not disclosed in non-patent documents 1 to 4 and patent documents 5 and 6.

Accordingly, an object of the invention is to provide a curable resin composition for a cemented lens capable of manufacturing a cemented lens excellent in adhesion between lenses and heat resistance at a temperature of 260°C or higher in reflowing treatment and capable of manufacturing a cemented lens having desired shapes with high accuracy, and further, capable of reducing manufacturing costs of the lens and capable of lightening lenses.

Another object of the invention is to provide an imaging lens equipped with a cemented lens excellent in adhesion between lenses and heat resistance at a temperature of 260°C or higher in reflowing treatment.

A further object of the invention is to provide a method capable of manufacturing a number of imaging lenses equipped with cemented lenses having the above advantages at low manufacturing costs.

### Means for Solving the Problems

As a result of earnest investigations, the present inventor has found that the above problems can be solved by the following constitutions.

That is, the invention is as follows.
(1) A curable resin composition for a cemented lens, comprising:
   (a) a compound represented by the following formula (I), and
   (b) a radical polymerization initiator: 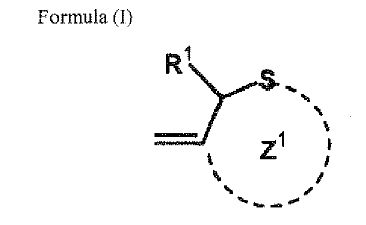
   wherein R¹ represents a hydrogen atom or an alkyl group; and Z¹ represents a cyclic structure together with the two carbon atoms and the sulfur atom.

Since the polymer of the compound represented by formula (I) has high heat resistance at 260°C or higher, the cemented lens obtained with the curable resin composition for a cemented lens as described in the above item (1) is excellent in a heat resisting property in the reflowing treatment (especially when a lead-free solder is used).

Further, the degree of volume shrinkage in polymerization of the compound represented by formula (I) is low, by which internal stress of the cured resin can also be reduced. Accordingly, not only a cemented lens of a desired shape can be produced with high accuracy, but also when lenses are made to a cemented lens, a stress of separating from other members is decreased, and so a highly adhesive cemented lens can be obtained.

In addition, the polymer of the compound represented by formula (I) is highly adhesive to other members (in particular, a glass material), by which also a cemented lens excellent in adhesion can be manufactured. Therefore, manufacturing costs of lenses can be decreased since adhesives for adhering lenses are not especially necessary.

Further, the polymer of the compound represented by formula (I) has a high refractive index as compared with conventionally known silicone resins and epoxy resins, taking the amounts of resins used being equivalent, the amount of the resin for manufacturing lenses can be reduced. Accordingly, lightening of lenses can be devised (for example, the thickness of a lens can be thinned, as a result birefringence index of the lens can be lessened). In addition, by reduction of the amount of resin, such an effect that the lens is difficultly damaged by reflowing treatment can also be revealed.
(2) The curable resin composition for a cemented lens as described in the above item (1), further comprising (c) an organic silicon compound having one or more silicon atoms bonded to a hydrogen atom in one molecule.

Since conventional lenses formed from silicone resins are high in water absorption rate, there are problems that desired lens performances are difficult to obtain. However, the cured resin of the curable resin composition for a cemented lens as described in the above item (2) has also a property of low water absorption, although it has a silicone portion (a portion introduced from a silicon compound by hydrosilylation reaction) which is thought to increase water absorption. Accordingly, a cemented lens low in water absorption can be manufactured with the curable resin composition for a cemented lens as described in the above item (2).

Further, when a cemented lens is manufactured by casting a curable resin composition for a cemented lens in a mold and then curing the curable resin composition, the curable resin composition for a cemented lens as in the above item (2) is high in flowability before curing and followability to the shape of a mold is high, and curing degree of the cured resin is high after curing, therefore, the obtained desired shape is difficult to deform. Accordingly, also for this reason, a cemented lens having a desired shape can be manufactured with the curable resin composition for a cemented lens as in the above item (2) with higher accuracy.
(3) The curable resin composition for a cemented lens as described in the above item (1) or (2), wherein the compound represented by formula (1) is a compound represented by the following formula (II): 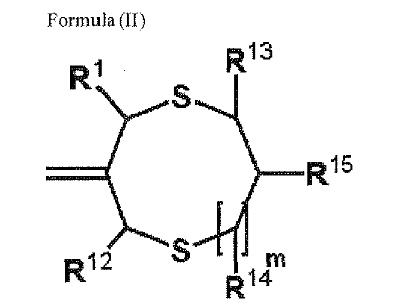 wherein R¹ has the same meaning as defined in formula (I); R¹² represents a hydrogen atom or an alkyl group; each of R¹³, R¹⁴ and R¹⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and m represents 0 or 1.
(4) The curable resin composition for a cemented lens as described in the above item (3), wherein each of R¹ and R¹² in formula (II) independently represents a hydrogen atom or a methyl group; and each of R¹³, R¹⁴ and R¹⁵ independently represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group.
(5) The curable resin composition for a cemented lens as described in the above item (3), wherein each of R¹ and R¹² in formula (II) represents a hydrogen atom; each of R¹³, R¹⁴ and R¹⁵ independently represents a hydrogen atom, an alkyl group, an aryl group, an alkoxy group, an aryloxy group, an acyloxy group, or an arylcarbonyloxy group; and m represents 1.
(6) The curable resin composition for a cemented lens as described in the above item (1) or (2), wherein the compound represented by formula (I) is a compound represented by the following formula (III): 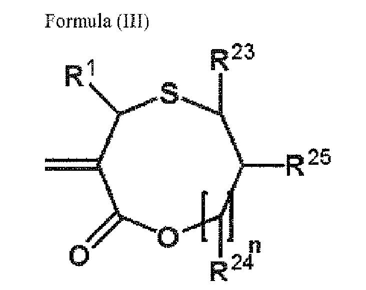 wherein R¹ has the same meaning as defined in formula (I); each of R²³, R²⁴ and R²⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and n represents 0 or 1.
(7) The curable resin composition for a cemented lens as described in the above item (6), wherein R¹ in formula (III) represents a hydrogen atom or a methyl group; and each of R²³, R²⁴ and R²⁵ independently represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group.
(8) The curable resin composition for a cemented lens as described in the above item (6), wherein R¹ in formula (III) represents a hydrogen atom or a methyl group; each of R²³, R²⁴ and R²⁵ independently represents a hydrogen atom, an alkyl group, an aryl group, an alkoxy group, an aryloxy group, an acyloxy group, or an arylcarbonyloxy group; and n represents 0.
(9) The curable resin composition for a cemented lens as described in any one of the above items (2) to (8), wherein the component (c) contains an organic silicon compound having two or more silicon atoms bonded to a hydrogen atom in one molecule.
(10) The curable resin composition for a cemented lens as described in any one of the above items (2) to (8), further comprising (d) a hydrosilylation reaction catalyst.
(11) An imaging lens comprising a cemented lens that comprises a first lens and a second lens cemented to the first lens, wherein the first lens and the second lens are arrayed from the object side toward the image side, the first lens is formed from a curable resin composition for a cemented lens described in any one of the above items (1) to (10), and the second lens is formed from a glass material.

Since the polymer of the compound represented by formula (I) has high heat resistance at 260°C or higher, the cemented lens equipped in the imaging lens in the above item (11) is excellent in a heat resisting property in the reflowing treatment (especially when a lead-free solder is used).

Further, the degree of volume shrinkage in polymerization of the polymer of the compound represented by formula (I) is low, by which internal stress of the cured resin can also be reduced. Accordingly, not only a cemented lens of a desired shape can be produced with high accuracy, but also when lenses are made to a cemented lens, a stress of separating from other members is decreased, and so a highly adhesive cemented lens can be obtained.

In addition, the polymer of the compound represented by formula (I) is highly adhesive to other members (in particular, a glass material), by which also a cemented lens excellent in adhesion can be manufactured.

Further, by forming the first lens with the curable resin composition for a cemented lens as described in the above item (2), an imaging lens equipped with a cemented lens particularly low in water absorption can be manufactured.
(12) The imaging lens as described in the above item (11), wherein the second lens is a plane parallel glass plate, and the first lens is a plano-convex lens whose object side surface is convex toward to the object side.
(13) The imaging lens as described in the above item (11), wherein the second lens is a plane parallel glass plate, and the first lens is a plano-concave lens whose object side surface is concave toward to the object side.
(14) The imaging lens as described in the above item (11), wherein the second lens is a biconvex glass plate, and the first lens is a lens whose object side surface is convex toward the object side.
(15) The imaging lens as described in the above item (11), wherein the second lens is a biconvex glass plate, and the first lens is a lens whose object side surface is concave toward the object side.
(16) The imaging lens as described in the above item (11), wherein the second lens is a biconcave glass plate, and the first lens is a lens whose object side surface I convex toward the object side.
(17) The imaging lens as described in the above item (11), wherein the second lens is a biconcave glass plate, and the first lens is a lens whose object side surface is concave toward the object side.
(18) The imaging lens as described in any one of the above item (11), (14) to (17), wherein the cemented lens further comprises a third lens cemented to the second lens on the image side of the second lens, and the third lens is formed from a curable resin composition for a cemented lens described in any one of the above items (1) to (10).
(19) The imaging lens as described in the above item (18), wherein the third lens is a lens having a convex surface on the image side of the third lens.
(20) The imaging lens as described in the above item (12) or (13), wherein the cemented lens further comprises a third lens on the image side of the second lens, and the third lens is formed from the curable resin composition for a cemented lens described in any one of the above items (1) to (10), and is a plano-convex lens having a convex surface on the image side of the third lens.
(21) The imaging lens as described in the above item (18), wherein the object side surface of the first lens and the image side surface of the third lens are aspheric surfaces.
(22) The imaging lens as described in the above item (18), wherein at least one surface of the second lens is subject to coating processing.
(23) A method for manufacturing an imaging lens comprising a cemented lens that comprises a first lens and a second lens cemented to the first lens, the method comprising:
   a step of preparing a first substrate having a plurality of first pits on one surface thereof, and a first copying jig having a plurality of transfer parts capable of entering the plurality of the first pits respectively, and arranging a curable resin composition for a cemented lens described in any one of the above items (1) to (10) between the first pits of the first substrate and the transfer parts of the first copying jig;
   a step of transferring shapes of the transfer parts of the first copying jig to the curable resin composition for the cemented lens by abutting the first copying jig on the one surface of the first substrate;
   a step of manufacturing the first lens by curing the curable resin composition for the cemented lens,
   a step of relatively releasing the first copying jig from the first substrate to manufacture a cemented body having the first substrate and a plurality of first lenses; and
   a step of forming the cemented lens by cutting the cemented body in a thickness direction such that a region containing each of the plurality of first lenses is segmented to obtain the second lens cemented to the first lens from the first substrate.

According to the manufacturing method of an imaging lens as described in the above item (23) (imprinting method), a number of imaging lenses equipped with cemented lenses having the above advantages can be manufactured at low manufacturing costs. (24) The method for manufacturing an imaging lens comprising the cemented lens that further comprises a third lens cemented to the second lens, as described in the above item (23),
the method comprising further forming a plurality of second pits on positions of the other surface of the first substrate, the positions corresponding to the plurality of the first pits respectively, and
the method further comprising, before the step of cutting the cemented body in the thickness direction,
a step of preparing a second copying jig having a plurality of transfer parts capable of entering the plurality of the second pits respectively, and arranging a curable resin composition for a cemented lens described in any one of the above items (1) to (10) between the second pits of the first substrate and the transfer parts of the second copying jig;
a step of transferring shapes of the transfer parts of the second copying jig to the curable resin composition for the cemented lens by abutting the second copying jig on the other surface of the first substrate;
a step of manufacturing the third lens by curing the curable resin composition for the cemented lens; and
a step of relatively releasing the second copying jig from the first substrate to form further a plurality of third lenses on the cemented body,
wherein region containing each of the plurality of first lenses further contains the corresponding third lens.

(25) The method for manufacturing an imaging lens as described in the above item (23) or (24), wherein the cemented body further has a plate member cemented to a surface on a first lens side of the cemented body.
(26) The method for manufacturing an imaging lens as described in any one of the above items (23) to (25), wherein the step of curing the curable resin composition for the cemented lens includes a step of irradiating with light.
(27) The method for manufacturing an imaging lens as described in any one of the above items (23) to (25), wherein the step of curing the curable resin composition for the cemented lens includes step of heating.
(28) The method for manufacturing an imaging lens as described in any one of the above items (23) to (25), wherein the step of curing the curable resin composition for the cemented lens includes a step of irradiating with light and a step of heating.

### Advantages of the Invention

According to the invention, it is possible to provide a curable resin composition for a cemented lens capable of manufacturing a cemented lens excellent in adhesion between lenses and heat resistance at a temperature of 260°C or higher in reflowing treatment and capable of manufacturing a cemented lens having desired shapes with high accuracy, and further, capable of reducing manufacturing costs of the lens and capable of lightening lenses.

Also, according to the invention, it is possible to provide an imaging lens equipped with a cemented lens excellent in adhesion between lenses and heat resistance at a temperature of 260°C or higher in reflowing treatment.

Further, according to the invention, it is possible to provide a method capable of manufacturing a number of imaging lenses equipped with cemented lenses having the above advantages at low manufacturing costs.

### Brief Description of the Drawings

Fig. 1 is a schematic sectional view showing the imaging apparatus using the imaging lens according to an exemplary embodiment of the invention.
Fig. 2 is a schematic sectional view showing the imaging apparatus using the imaging lens according to another exemplary embodiment of the invention.
Fig. 3 is a schematic sectional view showing the imaging apparatus using the imaging lens according to other exemplary embodiment of the invention.
Fig. 4 is a schematic sectional view showing the imaging apparatus using the imaging lens according to other exemplary embodiment of the invention.
Fig. 5 is a schematic sectional view showing the imaging apparatus using the imaging lens according to other exemplary embodiment of the invention.
Fig. 6 is a schematic sectional view showing the imaging apparatus using the imaging lens according to other exemplary embodiment of the invention.
Fig. 7 is a partial oblique view showing the glass substrate for use in the manufacture of the imaging lens according to an exemplary embodiment of the invention.
Fig. 8 is a partial oblique view showing the plate member for use in the manufacture of the imaging lens according to an exemplary embodiment of the invention.
Fig. 9 is a schematic sectional view explaining the manufacture of the imaging lens according to an exemplary embodiment of the invention.
Fig. 10 is a schematic sectional view explaining the manufacture of the imaging lens according to an exemplary embodiment of the invention.
Fig. 11 is a schematic sectional view explaining the manufacture of the imaging lens according to an exemplary embodiment of the invention.
Fig. 12 is a schematic sectional view explaining the manufacture of the imaging lens according to an exemplary embodiment of the invention.
Fig. 13 is a schematic sectional view explaining the manufacture of the imaging lens according to an exemplary embodiment of the invention.
Fig. 14 is a schematic sectional view explaining the manufacture of the imaging lens according to an exemplary embodiment of the invention.
Fig. 15 is a schematic sectional view explaining the manufacture of the imaging lens according to another exemplary embodiment of the invention.
Fig. 16 is a schematic sectional view explaining the manufacture of the imaging lens according to other exemplary embodiment of the invention.
Fig. 17 is a schematic sectional view explaining the manufacture of the imaging lens according to other exemplary embodiment of the invention.
Fig. 18 is a schematic sectional view showing the mold for use in the manufacture of the cemented lens in example and comparative example.
Fig. 19 is a schematic sectional view showing the shape of the cemented lens in example and comparative example.
Fig. 20 is a schematic sectional view showing the shape of the cemented lens in example and comparative example.

### Mode for Carrying Out the Invention

### (Curable resin composition for cemented lens)

A first curable resin composition for the cemented lens of the invention includes:
(a) a compound represented by the following formula (I), and
(b) a radical polymerization initiator.

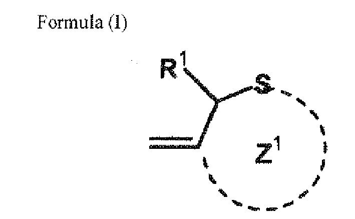

In formula (I), R¹ represents a hydrogen atom or an alkyl group; and Z¹ represents a cyclic structure together with the two carbon atoms and the sulfur atom.

A second curable resin composition for a cemented lens of the invention contains:
(a) a compound represented by the following formula (I),
(b) a radical polymerization initiator, and
(c) an organic silicon compound having one or more silicon atoms bonded to a hydrogen atom in one molecule.

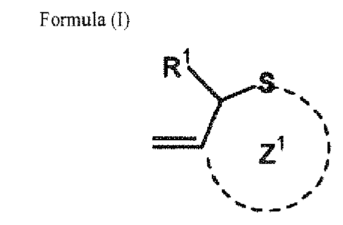

In formula (I), R¹ represents a hydrogen atom or an alkyl group; and Z¹ represents a cyclic structure together with the two carbon atoms and the sulfur atom.

In the invention, "curable resin composition" means a composition capable of generating polymerization reaction of the polymerizable components contained by irradiation with light, exposure to radiation, heating, or by the use of a polymerization initiator.

### <(a) Compound represented by formula (I)>

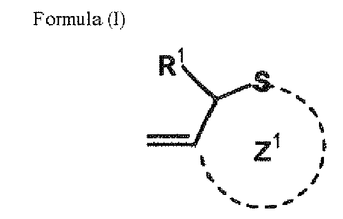

In formula (I), R¹ represents a hydrogen atom or an alkyl group; and Z¹ represents a cyclic structure together with the two carbon atoms and the sulfur atom.

The compound represented by formula (I) is hereinafter referred to as a cyclic allylsulfide monomer or a cyclic allylsulfide compound. The cyclic allylsulfide monomer can function as a polymerizable component, and is preferably a compound capable of causing radical polymerization directly by heating or irradiation with light or by the action of a radical polymerization initiator. The compound changes to a polymer having a double bond by ring opening polymerization. The compound represented by formula (I) is little in volume shrinkage by curing, and so deformation of the cured product formed can be decreased and internal stress of the cured resin can also be reduced. Accordingly, the cured resin has very high dimensional stability. As a result, not only a cemented lens of a desired shape can be produced with high accuracy, but also a stress of separating from other members is decreased when lenses are made to a cemented lens, so that a highly adhesive cemented lens can be obtained. In addition, the polymer is highly adhesive to other members (in particular, a glass material) unexpectedly even when a polar functional group revealing hydrogen bonding is not present, by which also a cemented lens excellent in adhesion can be obtained.

The above double bond is active to hydrosilylation and it can also be called a reactive polymer. The compound represented by formula (I) is little in volume shrinkage by curing, and so deformation of the cured resin formed can be lessened and internal stress of the cured resin can also be reduced. Accordingly, the cured resin in particular formed with the second curable resin composition for a cemented lens is very dimensionally stable and so useful.

Further, the cured resin obtained from the second curable resin composition for a cemented lens has also a property of low water absorption, although it has a silicone portion (a portion introduced from a silicon compound by hydrosilylation reaction) which is thought to increase water absorption.

The polymerization reaction is represented by the following formulae:

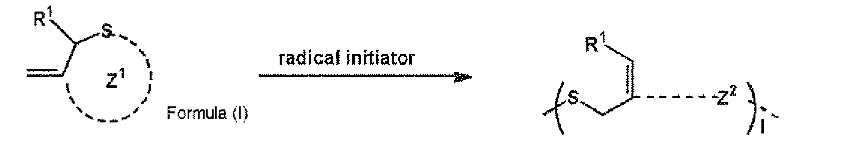

In the above reaction formula, R¹ represents a hydrogen atom or an alkyl group; and Z¹ represents a cyclic structure together with the two carbon atoms and the sulfur atom. Z² represents a linking group formed by atomic groups other than the two carbon atoms and the sulfur atom in the case where Z¹ opens the ring. 1 represents the number of the repeating unit.

It is confirmed by the present inventor that the growth radical of the cyclic allylsulfide monomer in the invention is an S radical, and the monomer has a hydrogen atom at the α-position of the S atom (hydrogen of the adjacent carbon), and so the monomer is not affected by oxygen polymerization inhibition as seen in thiolene reactions. Accordingly, the monomer is **characterized in that** the polymerization reaction easily progresses even in the presence of oxygen or in the presence of dissolved oxygen as compared with general purpose radical polymerizable monomers such as methacrylate and acrylate monomers. When a general purpose monomer is used in constituting a curable resin composition for a cemented lens, the monomer is affected by polymerization inhibition in a certain degree due to dissolved oxygen. Contrary to this, when the cyclic allylsulfide monomer is used, the monomer is difficultly affected by polymerization inhibition. Therefore, curing is possible with a small amount of radical polymerization initiator.

In formula (I), Z¹ represents a cyclic structure together with the two carbon atoms and the sulfur atom. As the constituent of the cyclic structure formed by Z¹, a methylene carbon can be exemplified. Other than the methylene carbon, divalent organic linking groups such as a carbonyl group, a thiocarbonyl group, an oxygen atom and a sulfur atom can also be exemplified. The cyclic structure is constituted by the combination of these groups. The number of the ring number is preferably 6- to 9-membered, more preferably 6- to 8-membered, and especially preferably 7- or 8-membered. The methylene carbon number of the cyclic structure is preferably 3 to 7, more preferably 4 to 6, and especially preferably 4 or 5.

In formula (I), R¹ represents a hydrogen atom or an alkyl group. The alkyl group represented by R¹ may be straight chain or branched, and may be unsubstituted or may have a substituent. The number of carbon atoms is preferably 1 to 20, more preferably 1 to 10, and especially preferably 1 to 3. Incidentally, in the specification of the invention, "number of carbon atoms" of a certain group means, with respect to a group having a substituent, the number of carbon atoms in a portion not containing a substituent.

As the alkyl group represented by R¹, e.g., a methyl group, an ethyl group, an n-propyl group, an isopropyl group, an n-butyl group, an isobutyl group, a t-butyl group, a pentyl group, a cyclopentyl group, a hexyl group, a cyclohexyl group, a heptyl group, an octyl group, a t-octyl group, a 2-ethylhexyl group, a decyl group, a dodecyl group, an octadecyl group, a 2,3-dibromopropyl group, an adamantyl group, a benzyl group, and a 4-bromobenzyl group are exemplified. These groups may further have a substituent.

In formula (1), when each of the groups represented by R₁ further has a substituent, the examples of the substituents include a halogen atom, an alkyl group, an alkenyl group, an alkoxy group, an aryloxy group, an alkylthio group, an alkoxycarbonyl group, an aryloxycarbonyl group, an amino group, an acyl group, an alkylaminocarbonyl group, an arylaminocarbonyl group, a sulfonamide group, a cyano group, a carboxy group, a hydroxy group, and a sulfonic acid group. Of these groups, a halogen atom, an alkoxy group and an alkylthio group are especially preferred. When the cyclic allylsulfide compound represented by formula (I) substitutes as the substituent, the compound represented by formula (I) is a polyfunctional compound.

In formula (I), it is preferred that R₁ represents a hydrogen atom or an alkyl group, the number of ring members of the cyclic structure represented by Z₁ is 6 to 9, and other than the two carbon atoms and the sulfur atom, the cyclic structure represented by Z₁ contains any of a carbonyl group, an oxygen atom and a sulfur atom, or the combination of them, besides methylene carbon, more preferably R₁ represents a hydrogen atom or an alkyl group, the number of ring members of the cyclic structure represented by Z₁ is 6 to 8, and other than the two carbon atoms and the sulfur atom, the cyclic structure represented by Z₁ contains the combination of a carbonyl group and an oxygen atom, or a sulfur atom, besides methylene carbon, and especially preferably R₁ represents a hydrogen atom or an alkyl group, the number of ring members of the cyclic structure represented by Z₁ is 7 or 8, and other than the two carbon atoms and the sulfur atom, the cyclic structure represented by Z₁ contains a sulfur atom, besides methylene carbon.

Of the above, it is still more preferred that R₁ represents a hydrogen atom.

Formula (I) is more preferably the following formula (II) or (III).

Formulae (II) and (III) are described below.

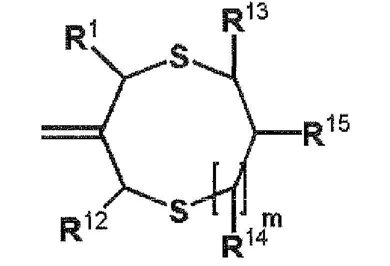

In formula (II), R¹ has the same meaning as defined in formula (I). R¹² represents a hydrogen atom or an alkyl group; each of R¹³, R¹⁴ and R¹⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and m represents 0 or 1.

In formula (II), details of the alkyl groups represented by R¹, R¹², R¹³, R¹⁴ and R¹⁵ are the same as the alkyl groups described in formula (I).

In formula (II), the aryl group represented by R¹³, R¹⁴ and R¹⁵ may be unsubstituted or may have a substituent. The number of carbon atoms is preferably 6 to 30, and especially preferably 6 to 20. The specific examples of aryl groups include, e.g., a phenyl group, a naphthyl group and an anthranyl group. Each of these groups may further have a substituent.

In formula (II), the heterocyclic group represented by R¹³, R¹⁴ and R¹⁵ may be unsubstituted or may have a substituent. The heterocyclic group is preferably a heterocyclic group having 4 to 14 carbon atoms, more preferably a heterocyclic group having 4 to 10 carbon atoms, and especially preferably a heterocyclic group having 5 carbon atoms. The specific examples of the heterocyclic groups represented by R¹³, R¹⁴ and R¹⁵ include a pyridine ring, a piperazine ring, a thiophene ring, a pyrrole ring, an imidazole ring, an oxazole ring, and a thiazole ring. Each of these groups may further have a substituent. A pyridine ring is especially preferred of the above heterocyclic rings.

In formula (II), the alkoxy group represented by R¹³, R¹⁴ and R¹⁵ may be straight chain or branched, and may be unsubstituted or may have a substituent. The number of carbon atoms is preferably 1 to 30, and more preferably 1 to 20. The examples of such alkoxy groups include, e.g., a methoxy group, an ethoxy group, an n-propyloxy group, an isopropyloxy group, an n-butyloxy group, an isobutyloxy group, a t-butyloxy group, a pentyloxy group, a cyclopentyloxy group, a hexyloxy group, a cyclohexyloxy group, a heptyloxy group, an octyloxy group, a t-octyloxy group, a 2-ethylhexyloxy group, a decyloxy group, a dodecyloxy group, an octadecyloxy group, a 2,3-dibromopropyloxy group, an adamantyloxy group, a benzyloxy group, and a 4-bromobenzyloxy group.

In formula (II), the aryloxy group represented by R¹³, R¹⁴ and R¹⁵ may be unsubstituted or may have a substituent. The number of carbon atoms is preferably 6 to 30, and especially preferably 6 to 20. The specific examples of aryloxy groups include, e.g., a phenyloxy group, a naphthyloxy group, and an anthranyloxy group.

In formula (II), the alkylthio group represented by R¹³, R¹⁴ and R¹⁵ may be straight chain or branched, and may be unsubstituted or may have a substituent. The number of carbon atoms is preferably 1 to 30, and more preferably 1 to 20. The specific examples of such alkylthio groups include, e.g., a methylthio group, an ethylthio group, an n-propylthio group, an isopropylthio group, an n-butylthio group, an isobutylthio group, a t-butylthio group, a pentylthio group, a cyclopentylthio group, a hexylthio group, a cyclohexylthio group, a heptylthio group, an octylthio group, a t-octylthio group, a 2-ethylhexylthio group, a decylthio group, a dodecylthio group, an octadecylthio group, a 2,3-dibromopropylthio group, an adamantylthio group, a benzylthio group, and a 4-bromobenzylthio group.

In formula (II), the arylthio group represented by R¹³, R¹⁴ and R¹⁵ may be unsubstituted or may have a substituent. The number of carbon atoms is preferably 6 to 30, and especially preferably 6 to 20. The specific examples of arylthio groups include, e.g., a phenylthio group, a naphthylthio group and an anthranylthio group.

In formula (II), the alkoxycarbonyl group represented by R¹³, R¹⁴ and R¹⁵ may be unsubstituted or may have a substituent. The number of carbon atoms is preferably 2 to 30, and more preferably 2 to 20. The specific examples of such alkoxycarbonyl groups include, e.g., a methyloxycarbonyl group, an ethyloxycarbonyl group, an n-propyloxycarbonyl group, an isopropyloxycarbonyl group, an n-butyloxycarbonyl group, an isobutyloxycarbonyl group, a t-butyloxycarbonyl group, a pentyloxycarbonyl group, a cyclopentyloxycarbonyl group, a hexyloxycarbonyl group, a cyclohexyloxycarbonyl group, a heptyloxycarbonyl group, an octyloxycarbonyl group, a t-octyloxycarbonyl group, a 2-ethylhexyloxycarbonyl group, a decyloxycarbonyl group, and a dodecyloxycarbonyl group.

In formula (II), the aryloxycarbonyl group represented by R¹³, R¹⁴ and R¹⁵ may be unsubstituted or may have a substituent. The number of carbon atoms is preferably 7 to 30, and especially preferably 7 to 20. The specific examples of aryloxycarbonyl group include, e.g., a phenyloxycarbonyl group, a naphthyloxycarbonyl group and an anthranyloxycarbonyl group.

In formula (II), the acyloxy group represented by R¹³, R¹⁴ and R¹⁵ may be unsubstituted or may have a substituent. The number of carbon atoms is preferably 2 to 30, and more preferably 2 to 20. The specific examples of such acyloxy groups include, e.g., a methylcarbonyloxy group, an ethylcarbonyloxy group, an n-propylcarbonyloxy group, an isopropylcarbonyloxy group, an n-butylcarbonyloxy group, an isobutylcarbonyloxy group, a t-butylcarbonyloxy group, a pentylcarbonyloxy group, a cyclopentylcarbonyloxy group, a hexylcarbonyloxy group, a cyclohexylcarbonyloxy group, a heptylcarbonyloxy group, an octylcarbonyloxy group, a t-octylcarbonyloxy group, a 2-ethylhexylcarbonyloxy group, a decylcarbonyloxy group, a dodecylcarbonyloxy group, and a benzoyloxy group.

In formula (II), the arylcarbonyloxy group represented by R¹³, R¹⁴ and R¹⁵ may be unsubstituted or may have a substituent. The number of carbon atoms is preferably 7 to 30, and especially preferably 7 to 20. The specific examples of such arylcarbonyloxy groups include, e.g., a phenylcarbonyloxy group, a naphthylcarbonyloxy group, and an anthranylcarbonyloxy group.

In formula (II), the acylamino group represented by R¹³, R¹⁴ and R¹⁵ may be unsubstituted or may have a substituent. The number of carbon atoms is preferably 2 to 30, and more preferably 2 to 20. The specific examples of such acylamino groups include, e.g., a methylcarbonylamino group, an ethylcarbonylamino group, and a phenylcarbonylamino group.

In formula (II), the sulfonylamino group represented by R¹³, R¹⁴ and R¹⁵ may be unsubstituted or may have a substituent. The number of carbon atoms is preferably 1 to 30, and more preferably 1 to 20. The specific examples of such sulfonylamino groups include, e.g., a methylsulfonylamino group, an ethylsulfonylamino group, and a phenylsulfonylamino group.

In formula (II), the amino group represented by R¹³, R¹⁴ and R¹⁵ may be a mono-substituted amino group or a di-substituted amino group, and a di-substituted amino group is preferred. The amino group may be unsubstituted or may have a substituent. The number of carbon atoms is preferably 1 to 30, and more preferably 1 to 20. The specific examples of such amino groups include, e.g., a dimethylamino group and a diphenylamino group.

In formula (II), the acyl group represented by R¹³, R¹⁴ and R¹⁵ may be unsubstituted or may have a substituent. The number of carbon atoms is preferably 2 to 30, and more preferably 2 to 20. The specific examples of such acyl groups include an acetyl group and a benzoyl group.

In formula (II), as the halogen atom represented by R¹³, R¹⁴ and R¹⁵, a chloro group, a bromo group and an iodo group are exemplified, and a bromo group is preferred.

In formula (II), when each of the groups represented by R¹, R¹², R¹³, R¹⁴ and R¹⁵ further has a substituent, as the examples of the substituent, a halogen atom, an alkyl group, an alkenyl group, an alkoxy group, an aryloxy group, an alkylthio group, an alkoxycarbonyl group, an aryloxycarbonyl group, an amino group, an acyl group, an alkylaminocarbonyl group, an arylaminocarbonyl group, a sulfonamide group, a cyano group, a carboxy group, a hydroxy group, and a sulfonic acid group are exemplified. Of these groups, a halogen atom, an alkoxy group, and an alkylthio group are especially preferred.

Further, when the cyclic allylsulfide compound represented by formula (II) substitutes as the substituent, the compound represented by formula (II) is a polyfunctional compound. That is, formula (II) may form a dimer via a linking group comprising "any group of R¹ and R¹² to R¹⁵" and "a single bond or a divalent group", or may form a t-mer via a linking group comprising "any group of R¹ and R¹² to R¹⁵" and "a t-valent group". t represents an integer of 3 or more, and preferably 3 to 6. Here, the divalent group and t-valent group are not especially restricted so long as they can link a plurality of compounds represented by formula (II) to each other.

Further, when any group of R¹ and R¹² to R¹⁵ is a hydrogen atom, the single bond or divalent group constituting the linking group in the dimer, and the t-valent group constituting the linking group in the t-mer are directly bonded to the ring of the cyclic allylsulfide represented by formula (II) in the form of substituting the hydrogen atom. When formula(II) is a polymer, formula (II) is preferably a dimer or a trimer.

In formula (II), m represents an integer of 0 or 1, and preferably m is 1.

Each of R¹ and R¹² independently represents a hydrogen atom or a methyl group, and is preferably a hydrogen atom.

As preferred embodiment of the compound represented by formula (II), each of R' and R¹² independently represents a hydrogen atom or a methyl group, and preferably represents a hydrogen atom. A compound in which each of R¹³, R¹⁴ and R¹⁵ independently preferably represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group can be exemplified.

R¹³ preferably represents a hydrogen atom or an alkyl group, and more preferably a hydrogen atom.

Each of R¹⁴ in the case of plurality independently represents a hydrogen atom, an alkyl group, an alkoxy group, an acyloxy group, or an arylcarbonyloxy group, more preferably a hydrogen atom or a methyl group, and still more preferably a hydrogen atom.

R¹⁵ preferably represents an alkyl group, an aryl group, an acyloxy group, or an arylcarbonyloxy group, more preferably an alkyl group, an acyloxy group, or an arylcarbonyloxy group, and still more preferably an acyloxy group or an arylcarbonyl- oxy group.

As more preferred embodiment, the compound represented by formula (II), in which each of R¹ and R¹² independently represents a hydrogen atom or a methyl group, each of R¹³, R¹⁴ and R¹⁵ independently represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group; in this embodiment, more preferably R¹⁵ represents a hydrogen atom, an alkyl group, an aryl group, an acyloxy group, or an arylcarbonyloxy group, and m represents 0 or 1, can be exemplified. As still more preferred embodiment, the compound in which each of R¹ and R¹² represents a hydrogen atom or a methyl group, each of R¹³ and R¹⁴ independently represents a hydrogen atom or a methyl group, R¹⁵ represents an alkyl group, an acyloxy group or an arylcarbonyloxy group, and m represents 0 or 1, can be exemplified. As still further preferred embodiment, the compound represented by formula (II) in which each of R¹ and R¹² represents a hydrogen atom, each of each of R¹³, R¹⁴ and R¹⁵ independently represents a hydrogen atom, an alkyl group, an aryl group, an alkoxy group, an aryloxy group, an acyloxy group, or an arylcarbonyloxy group, and m represents 1, can be exemplified. As the most preferred embodiment, the compound in which each of R¹ and R¹² represents a hydrogen atom, each of R¹³ and R¹⁴ represents a hydrogen atom, R¹⁵ represents an acyloxy group or an arylcarbonyloxy group, and m represents 1, can be exemplified.

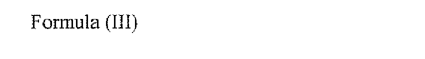

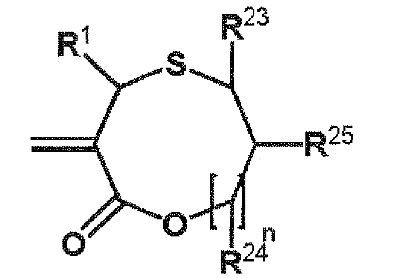

In formula (III), R¹ has the same meaning as defined in formula (I). Each of R²³, R²⁴ and R²⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and n represents 0 or 1.

In formula (III), details of the alkyl group represented by R¹, R²³, R²⁴ and R²⁵ are the same as the alkyl group described in formula (I).

In formula (III), details of the aryl group, heterocyclic group, alkoxy group, aryloxy group, alkylthio group, arylthio group, alkoxycarbonyl group, aryloxycarbonyl group, acyloxy group, arylcarbonyloxy group, acylamino group, sulfonylamino group, amino group, acyl group and halogen atom represented by R²³, R²⁴ and R²⁵ are the same as the aryl group, heterocyclic group, alkoxy group, aryloxy group, alkylthio group, arylthio group, alkoxycarbonyl group, aryloxycarbonyl group, acyloxy group, arylcarbonyloxy group, acylamino group, sulfonylamino group, amino group, acyl group and halogen atom respectively described in formula (II).

In formula (III), when each of the groups represented by R¹, R²³, R²⁴ and R²⁵ further has a substituent, the examples of substituent include a halogen atom, an alkyl group, an alkenyl group, an alkoxy group, an aryloxy group, an alkylthio group, an alkoxycarbonyl group, an aryloxycarbonyl group, an amino group, an acyl group, an alkylaminocarbonyl group, an arylaminocarbonyl group, a sulfonamide group, a cyano group, a carboxy group, a hydroxy group, and a sulfonic acid group. Of these groups, a halogen atom, an alkoxy group, and an alkylthio group are especially preferred. Further, when the cyclic allylsulfide compound represented by formula (III) substitutes as the substituent, the compound represented by formula (III) is a polyfunctional compound. That is, formula (III) may form a dimer via a linking group comprising "any group of R¹ and R²³ to R²⁵ " and "a single bond or a divalent group", or may form a t-mer via a linking group comprising "any group of R' and R²³ to R²⁵ " and "a t-valent group". t represents an integer of 3 or more, and preferably 3 to 6. Here, the divalent group and t-valent group are not especially restricted so long as they can link a plurality of compounds represented by formula (III) to each other.

Further, when any group of R¹ and R²³ to R²⁵ is a hydrogen atom, the single bond or divalent group consisting of the linking group in the dimer, and the t-valent group consisting of the linking group in the t-mer are directly bonded to the ring of the cyclic allylsulfide in formula (III) in the form of substituting the hydrogen atom. When formula (III) is a polymer, formula (III) is preferably a dimer or a trimer.

In formula (III), n represents an integer of 0 or 1, and preferably n is 0.

R²³ preferably represents a hydrogen atom or an alkyl group, and more preferably a hydrogen atom.

When a plurality of R²⁴ are present, each of R²⁴ independently represents a hydrogen atom, an alkyl group, an alkoxy group, an acyloxy group, or an arylcarbonyloxy group, more preferably a hydrogen atom or a methyl group and still more preferably a hydrogen atom.

R²⁵ preferably represents a hydrogen atom, an alkyl group, an aryl group, an acyloxy group, or an arylcarbonyloxy group, more preferably a hydrogen atom, an alkyl group, an acyloxy group, or an arylcarbonyloxy group, and still more preferably a hydrogen atom.

As preferred embodiment of the compound represented by formula (III), a compound in which R¹ represents a hydrogen atom or a methyl group, and each of R²³, R²⁴ and R²⁵ independently preferably represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group can be exemplified. As more preferred embodiment, a compound represented by formula (III) in which R¹ represents a hydrogen atom or a methyl group, and each of R²³ and R²⁴ independently represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group, R²⁵ represents a hydrogen atom, an allcyl group, an aryl group, an acyloxy group, or an arylcarbonyloxy group, and n represents 0 or 1 can be exemplified. As still more preferred embodiment, a compound represented by formula (III) in which R¹ represents a hydrogen atom or a methyl group, each of R²³ and R²⁴ independently represents a hydrogen atom or a methyl group, R²⁵ represents a hydrogen atom, an alkyl group, an acyloxy group or an arylcarbonyloxy group, and n represents 0 or 1 can be exemplified. As still further preferred embodiment, the compound represented by formula (III) in which R¹ represents a hydrogen atom or a methyl group, each of each of R²³, R²⁴ and R²⁵ independently represents a hydrogen atom, an alkyl group, an aryl group, an alkoxy group, an aryloxy group, an acyloxy group, or an arylcarbonyloxy group, and n represents 0 can be exemplified. As the most preferred embodiment, a compound in which R¹ represents a methyl group, each of R²³ and R²⁴ represents a hydrogen atom, R²⁵ represents a hydrogen atom, and n represents 0 can be exemplified.

In particular, the second curable resin composition for a cemented lens in the invention may have a dye structure portion having high absorption in the structure represented by formula (I), (II) or (III). In particular, the compound represented by formula (I) may have wavelength λ₁ nm to be 5,000 mol·l·cm⁻¹ or more of molar extinction coefficient in absorption spectrum of the range of 200 to 1,000 nm. As expressed by Kramers-Kronig relations, the relationship between absorption and refractive index of a compound has a high refractive index region in the wavelength region longer than wavelength λ₁ nm. Accordingly, the dye structure portion having high absorption is useful for uses where a laser ray of special wavelength is transmitted.

The molar extinction coefficient is preferably 10,000 mol·l·cm⁻¹ or more. The least upper bound is not especially restricted, but it is, for example, 200,000 mol·l·cm⁻¹ or so.

The laser ray of wavelength of 405 nm or 532 nm is especially preferred. For the improvement of transmittance, it is preferred that the curable resin composition for a cemented lens in the invention does not have absorption at laser wavelength. Here, the terminology "does not have absorption" means that the molar extinction coefficient of a curable resin composition is preferably 100 mol·l·cm⁻¹ or less, more preferably 50 mol·l·cm⁻¹ or less, and most preferably 0 mol·l·cm⁻¹ or less.

The specific structures thereof are described below.

The cyclic allylsulfide compound in the invention is represented by formula (I), (II) or (III), and preferably has absorption characteristic as described above. For obtaining the above absorption characteristic, it is preferred for the cyclic allylsulfide compound to contain at least one partial structure represented by the following formula (C-1), (C-2), (C-3), (C-4), (C-5) or (C-6). The number of the partial structure contained in the cyclic allylsulfide compound in the invention is at least one, but the number is not especially restricted so long as the above absorption characteristic can be obtained. However, the cyclic allylsulfide compounds in the invention having the above absorption characteristic are not limited to those containing the partial structure represented by the following formula (C-1), (C-2), (C-3),(C-4), (C-5) or (C-6). "To contain as a partial structure" means that the partial structure represented by formula (C-1), (C-2), (C-3), (C-4), (C-5) or (C-6) is contained in the compound represented by formula (I), (II) or (III) as the same molecule. Specifically, the structure represented by formula (C-1), (C-2), (C-3), (C-4), (C-5) or (C-6) is linked as the substituent of R¹ and Z¹ in formula (I), R¹, R¹², R¹³, R¹⁴ and R¹⁵ in formula (II), and R¹, R²³, R²⁴ and R²⁵ in formula (III). Regarding formula (II), the partial structure is preferably linked as the substituent of R¹³, R¹⁴ and R¹⁵, and especially preferably as the substituent of R¹⁵. As to formula (III), the structure is preferably linked as the substituent of R²³, R²⁴ and R²⁵, and especially preferably as the substituent of R²⁵.

"Molar extinction coefficient" in the invention is a value obtained by dissolving the cyclic allylsulfide compound in the invention in a solvent capable of dissolving the monomer such as methylene chloride, chloroform, methanol, acetonitrile or the like to prepare a solution, and measuring the extinction coefficient of the solution with a spectrophotometer for ultraviolet and visible region.

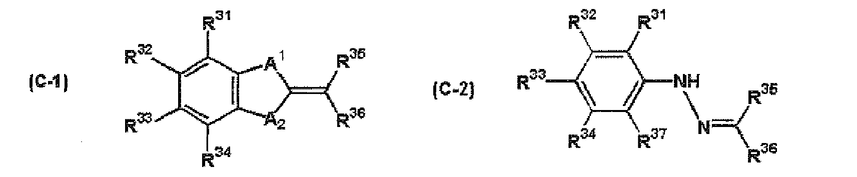

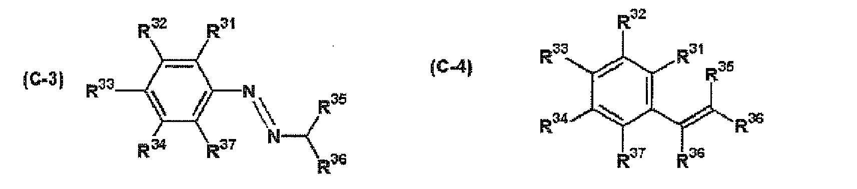

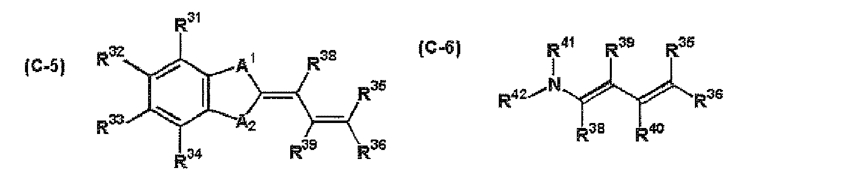

In the above formulae, each of R³¹, R³², R³³, R³⁴ and R³⁷ independently represents a hydrogen atom, an alkyl group, an aryl group, a heterocyclic group, an alkoxy group, an aryloxy group, an alkoxycarbonyl group, an aryloxycarbonyl group, an acyl group, a sulfonyl group, a carbamoyl group, a sulfamoyl group, an amino group, an acyloxy group, an acylamino group, a hydroxy group, a carboxylic acid group, a sulfonic acid group, a halogen atom, or a linking group; each of A¹ and A² independently represents -CR⁴³R⁴⁴-, -O-, -NR⁴⁵-, -S-, or -C(=O)-; each of R⁴³, R⁴⁴ and R⁴⁵ independently represents a hydrogen atom, an alkyl group, an aryl group, or a linking group; each of R³⁵ and R³⁶ independently represents an electron-withdrawing substituent or a linking group, and R³⁵ and R³⁶ may be bonded to each other to form a cyclic structure; each of R³⁸, R³⁹ and R⁴⁰ independently represents a hydrogen atom, an alkyl group, or a linking group; each of R⁴¹ and R⁴² independently represents a hydrogen atom, an alkyl group, an aryl group, a heterocyclic group, an acyl group, a sulfonyl group, or a linking group; and each of partial structures (C-1), (C-2), (C-3), (C-4), (C-5) and (C-6) contains one or more linking groups.

When the partial structure represented by formula (C-1), (C-2), (C-3), (C-4), (C-5) or (C-6) is linked to the compound represented by formula (I), (II) or (III), the linking group is preferably a group selected from an alkylene group, a phenylene group, -O-, -S-, -CO-, and -NR⁴⁵-, or a combination of two or more of these groups. R⁴⁵ has the same meaning as described above. An alkylene group, -O-, -S-, -CO-, and a combination of two or more of these groups are preferred, an alkylene group, -O-, -CO-, and a combination of two or more of these groups are more preferred, an alkylene group, -O-, and a combination of them are especially preferred, and an ethylene oxide chain having a constitutive unit of -(OCH₂CH₂)- is most preferred.

The partial structure represented by formula (C-1), (C-2), (C-3), (C-4), (C-5) or (C-6) will be explained below.

In formulae (C-1) to (C-6), details of the alkyl group represented by R³¹, R³², R³³, R³⁴, R³⁷, R³⁸, R³⁹, R⁴⁰, R⁴¹, R⁴², R⁴³, R⁴⁴ and R⁴⁵ are the same as the explanation of the alkyl group in formula (I).

In formulae (C-1) to (C-6), details of the aryl group represented by R³¹, R³², R³³, R³⁴, R³⁷, R⁴¹, R⁴², R⁴³, R⁴⁴ and R⁵⁵ are the same as the explanation of the aryl group in formula (I).

In formulae (C-1) to (C-6), details of the heterocyclic group represented by R³¹, R³², R³³, R³⁴, R³⁷, R⁴¹ and R⁴² are the same as the explanation of the heterocyclic group in formula (I).

In formulae (C-1) to (C-6), details of the alkoxy group represented by R³¹, R³², R³³, R³⁴ and R³⁷ are the same as the explanation of the alkoxy group in formula (I).

In formulae (C-1) to (C-6), details of the aryloxy group represented by R³¹, R³², R³³, R³⁴ and R³⁷ are the same as the explanation of the aryloxy group in formula (I).

In formulae (C-1) to (C-6), details of the alkoxycarbonyl group represented by R³¹, R³² R³³, R³⁴ and R³⁷ are the same as the explanation of the alkoxycarbonyl group in formula (I).

In formulae (C-1) to (C-6), details of the aryloxycarbonyl group represented by R³¹, R³² R³³, R³⁴ and R³⁷ are the same as the explanation of the aryloxycarbonyl group in formula (I).

In formulae (C-1) to (C-6), the acyl group represented by R³¹, R³², R³³, R³⁴, R³⁷, R⁴¹ and R⁴² is preferably an acyl group having 2 to 10 carbon, atoms, more preferably having 2 to 6 carbon atoms, and most preferably having 4 carbon atoms. The specific examples of such acyl groups include a methylcarbonyl group, an ethylcarbonyl group, an n-propylcarbonyl group, an isopropylcarbonyl group, an n-butylcarbonyl group, an isobutylcarbonyl group, a t-butylearbonyl group, a pentylcarbonyl group, a cyclopentylcarbonyl group, a hexylcarbonyl group, a cyclohexylcarbonyl group, a heptylcarbonyl group, an octylcarbonyl group, a t-octylcarbonyl group, a 2-ethythexylcarbonyl group, a decylcarbonyl group, a doderylearbonyl group, and a benzoyl group.

In formulae (C-1) to (C-6), the sulfonyl group represented by R³¹, R³², R³³, R³⁴, R³⁷, R⁴¹ and R⁴² is preferably a sulfonyl group having I to 10 carbon atoms, more preferably having 1 to 6 carbon atoms, and most preferably having 1 to 4 carbon atoms. The specific examples of such sulfonyl groups include a methylsulfonyl group, an ethylsulfonyl group, an n-propylsulfonyl group, an isopropylsulfonyl group, an n-butylsulfonyl group, an isobutylsulfonyl group, a t-butylsulfonyl group, a pentylsulfonyl group, a cyclopentylsulfonyl group, a hexylsulfonyl group, a cyclohexylsulfonyl group, a heptylsulfonyl group, an octylsulfonyl group, a t-octylsulfonyl group, a 2-ethylbexylsulfonyl group, a decylsulfonyl group, and a doderylsulfonyl group.

In formulae (C-1) to (C-6), the carbamoyl group represented by R³¹, R³², R³³, R³⁴ and R³⁷ is preferably a carbamoyl group having 1 to 12 carbon atoms, and more preferably a carbamoyl group having 1 to 6 carbon atoms. The specific examples of such carbamoyl groups include, e.g., a methylcarbamoyl group, an ethylcarbamoyl group, an n-propylcarbarnoyl group, an isopropylcarbamoyl group, an n-butylcarbamoyl group, an isobutylcarbamoyl group, a t-butylcarbamoyl group, and a phenylcarbamoyl group. These carbamoyl groups may further be substituted with a substituent.

In formulae (C-1) to (C-6), the sulfamoyl group represented by R³¹, R³², R³³, R³⁴ and R³⁷ is preferably a sulfamoyl group having 1 to 12 carbon atoms, and more preferably having 1 to 6 carbon atoms. The specific examples of such sulfamoyl groups include, e.g., a methylsulfamoyl group, an ethylsulfamoyl group, an n-propylsulfamoyl group, an isopropylsulfamoyl group, an n-butylsulfamoyl group, an isobutylsulfamoyl group, a t-butylsulfat-noyl group, and a phenylsulfamoyl grop. These sulfamoyl groups may further be substituted with a substituent.

In formulae (C-1) to (C-6), details of the amino group represented by R³¹, R³², R³³, R³⁴ and R³⁷ are the same as the explanation of the amino group in formula (I).

In formulae (C-1) to (C-6), details of the acyloxy group represented by R³¹, R³², R³³, R³⁴ and R³⁷ are the same as the explanation of the acyloxy group in formula (I).

In formulae (C-1) to (C-6), details of the acylamino group represented by R³¹ R³² R³³, R³⁴ and R³⁷ are the same as the explanation of the acylamino group in formula (I).

In formulae (C-1) to (C-6), details of the halogen atom represented by R³¹, R³², R³³, R³⁴ and R³⁷ are the same as the explanation of the halogen atom in formula (I).

In formulae (C-1) to (C-6), each of A¹ and A² independently represents -CR⁴³R⁴⁴-, -O-, -NR⁴⁵-, -S-, or -C(=O)-, preferably -CR⁴³R⁴⁴-, -O-, -NR⁴⁵-, or -S-, more preferably -O-, -NR⁴⁵-, or -S-, and still more preferably -NR⁴⁵- or -S-.

As the specific combination of A¹ and A², either one and another of A¹ and A² of (-CR⁴³R⁴⁴-, -NR⁴⁵-), (-S-, -S-), (-NR⁴⁵-, -S-), (-O-, -NR⁴⁵-), (-NR⁴⁵-, -NR⁴⁵-), and (-C(=O)-, -NR⁴⁵-) are exemplified, preferably (-S-, -S-), (-NR⁴⁵-, -S-), (-O- -NR⁴⁵-), and (-NR⁴⁵-, -NR⁴⁵-), more preferably (-NR⁴⁵-, -S-) and (-O-, -NR⁴⁵-), and most preferably (-NR⁴⁵-, -S-).

In formulae (C-1) to (C-6), the electron-withdrawing substituent represented by R³⁵ and R³⁶ is a substituent having a Hammett's substituent constant σₚ value of a positive value, and preferably a substituent having a σₚ value of 0.2 or more and 1.0 or less. The specific examples of electron-withdrawing substituents having a σₚ value of 0.2 or more include an acyl group, a formyl group, an acyloxy group, an acylthio group, a carbamoyl group, an allcyloxycarbonyl group, an aryloxycarbonyl group, a cyano group, a nitro group, a dialkylphosphono group, a diarylphosphono group, a dialkylphosphinyl group, a diarylphosphinyl group, a phosphoryl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, an imino group, an imino group substituted with an N-atom, a carboxy group (and salt thereof), an alkyl group substituted with at least two or more halogen atoms, an alkoxy group substituted with at least two or more halogen atoms, an aryloxy group substituted with at least two or more halogen atoms, an acylamino group, an alkylamino group substituted with at least two or more halogen atoms, an alkylthio grop substituted with at least two or more halogen atoms, an aryl group substituted with other electron-withdrawing substituent having a σₚ value of 0.2 or more, a heterocyclic group, a halogen atom, an azo group, and a selenocyanate group. Hammett's σₚ value is described in detail in Hansch C., Leo A., and Taft R.W., Chem. Rev., 1991, 91, 165-195, Of the above groups, a cyano group, an alkyloxycarbonyl group, an aryloxycarbonyl group, an acyl group, and a sulfonyl group are preferred.

Substituent represented by R³⁵ and substituent represented by R³⁶ may take various combinations. The following combinations 1 to 9 can be exemplified as preferred combinations. In combinations 2, 3 and 4, the substituents represented by R³⁵ and the substituents represented by R³⁶ may be the same with or different from each other.
(Combination 1) R³⁵: a cyano group, R³⁶: a cyano group
(Combination 2) R³⁵: an acyl group, R³⁶: an acyl group
(Combination 3) R³⁵: an alkyloxycarbonyl group or an aryloxycarbonyl group, R³⁶: an alkyloxycarbonyl group or an aryloxycarbonyl group
(Combination 4) R³⁵: a sulfonyl group, R³⁶: a sulfonyl group
(Combination 5) R³⁵: a cyano group, R³⁶: an alkyloxycarbonyl group or an aryloxycarbonyl group
(Combination 6) R³⁵: a cyano group, R³⁶: an acyl group
(Combination 7) R³⁵: an alkyloxycarbonyl group or an aryloxycarbonyl group, R³⁶: an acyl group
(Combination 8) R³⁵: an acyl group, R³⁶: a sulfonyl group
(Combination 9) R³⁵: an alkyloxycarbonyl group or an aryloxycarbonyl group, R³⁶: a sulfonyl group

Of the above combinations, combinations 1, 3, 4, 5 and 9 are more preferred, and combination 5 is most preferred. In formulae (C-1) to (C-6), R³⁵ and R³⁶ may be bonded to each other to form a cyclic structure. When R³⁵ and R³⁶ are bonded, the bonding group may be a carbon chain. Further, the bonding group may contain N, O or S atom.

As described above, since formula (C-1), (C-2), (C-3), (C-4), (C-5) or (C-6) is a partial structure of the compound represented by formula (I), (II) or (III), at least one linking group is contained in the partial structure. That is, any group represented by R³¹, R³², R³³, R³⁴, R³⁷, R³⁸, R³⁹, R⁴⁰, R⁴¹, R⁴², R⁴³, R⁴⁴ or R⁴⁵ is present as a linking group, and the partial structure represented by formula (C-1), (C-2), (C-3), (C-4), (C-5) or (C-6) is linked to and contained in the compound represented by formula (1), (II) or (III) with any of the above linking groups. It is sufficient that one linking group is contained in each partial structure. Details of the linking groups are described above.

The specific examples of the cyclic allylsulfide compounds represented by any of formulae (I), (II) and (III) are shown below. However, the invention is not restricted to these specific examples.

In the following formulae, C₆H₁₃ and C₄H₉ show structures having no branching.

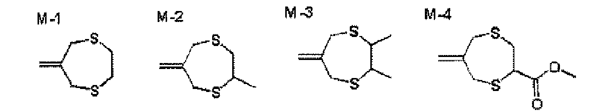

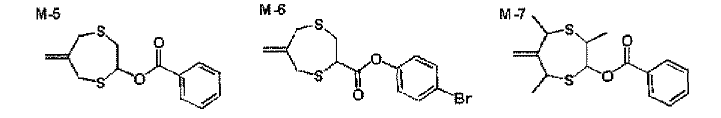

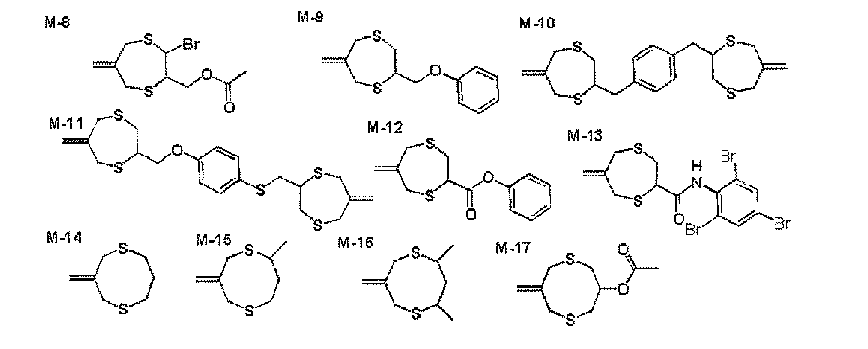

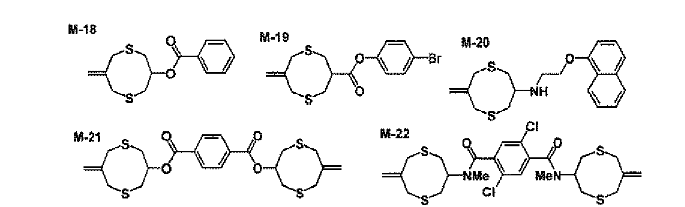

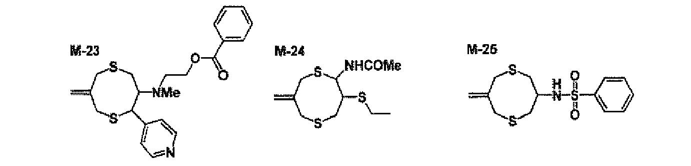

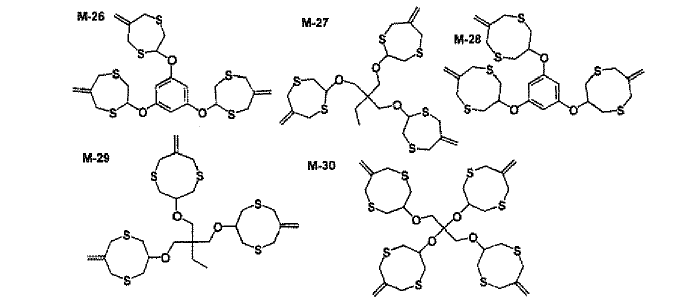

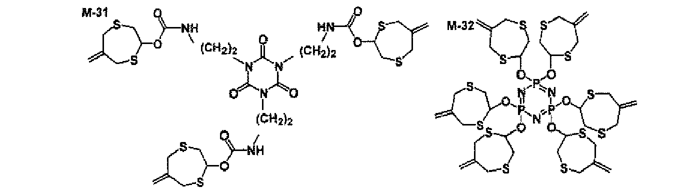

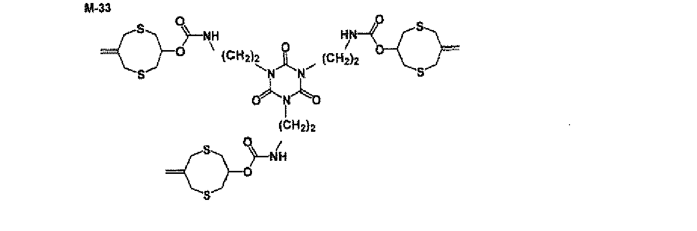

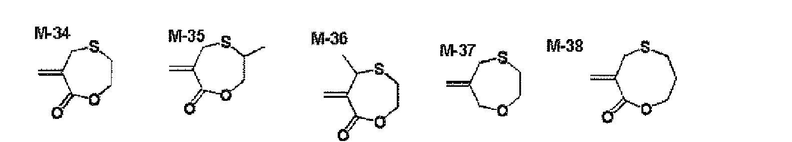

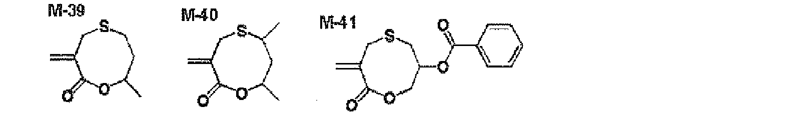

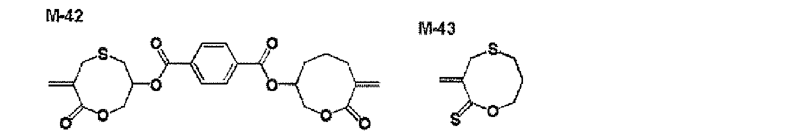

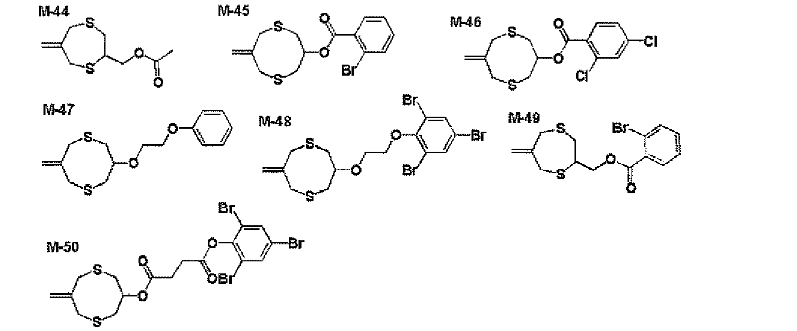

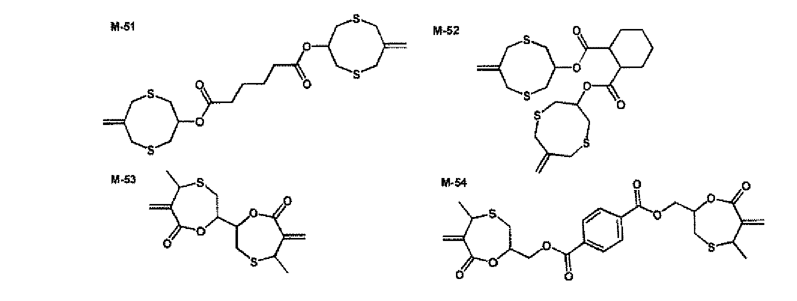

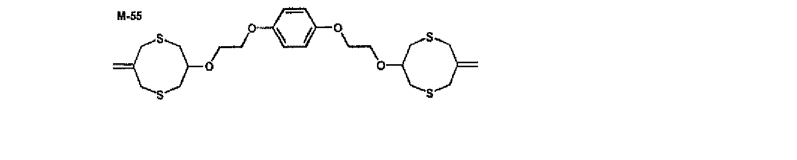

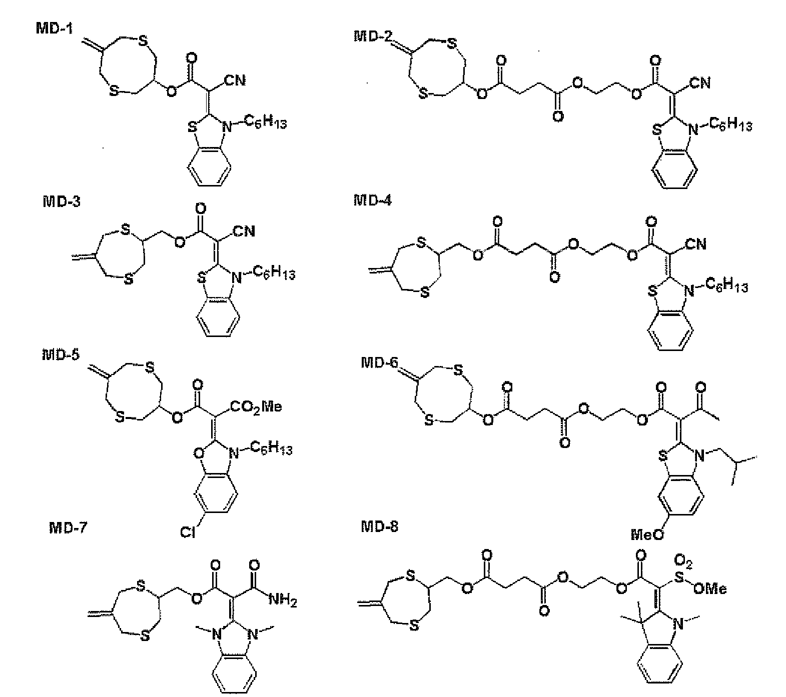

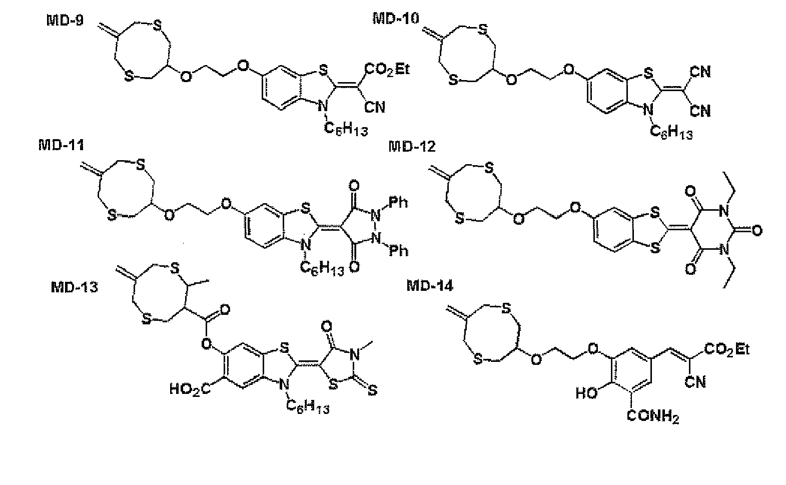

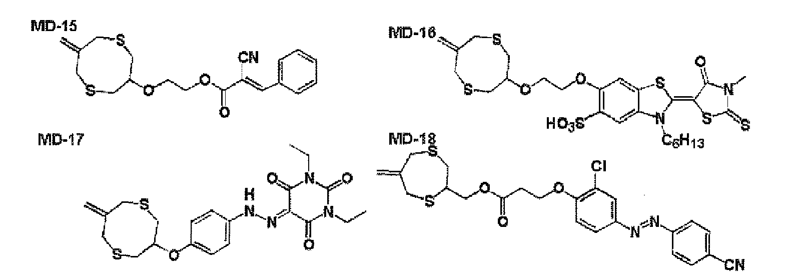

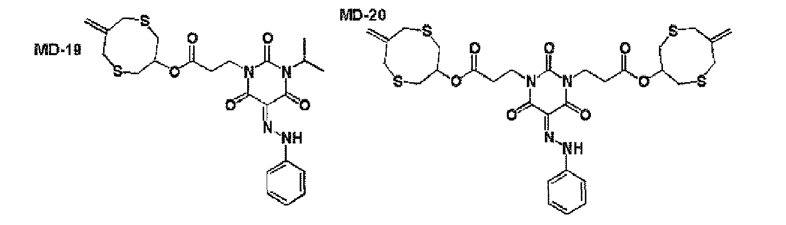

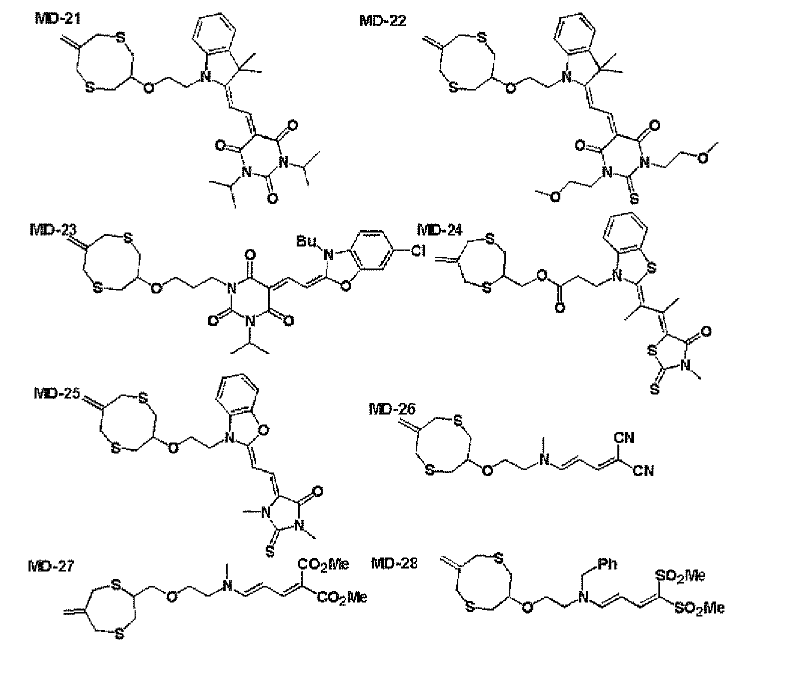

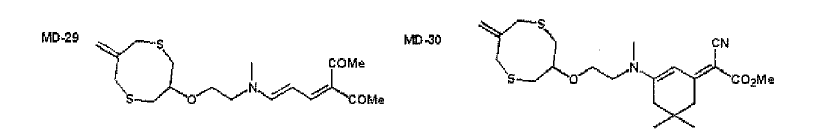

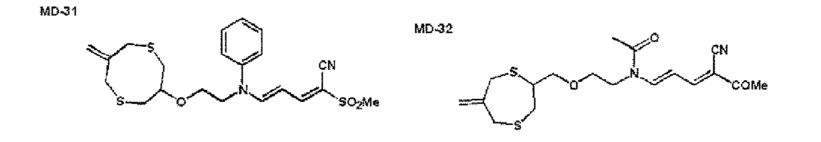

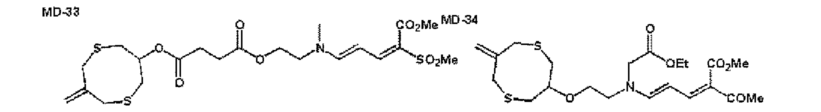

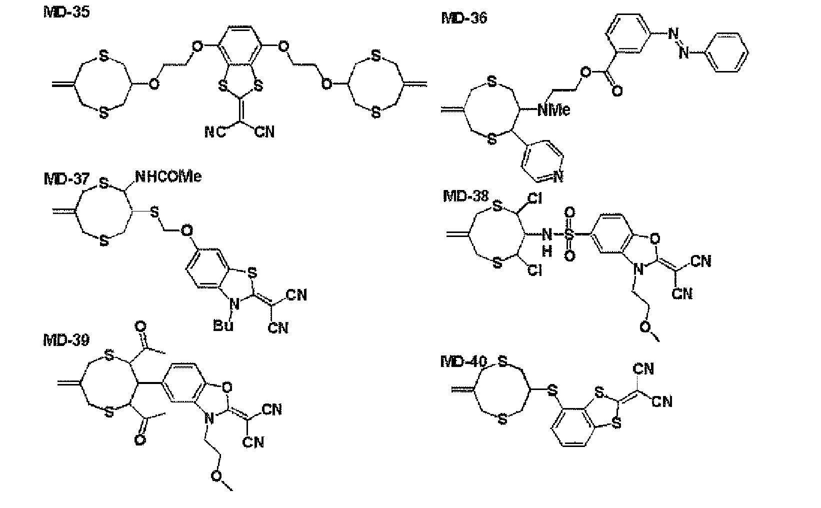

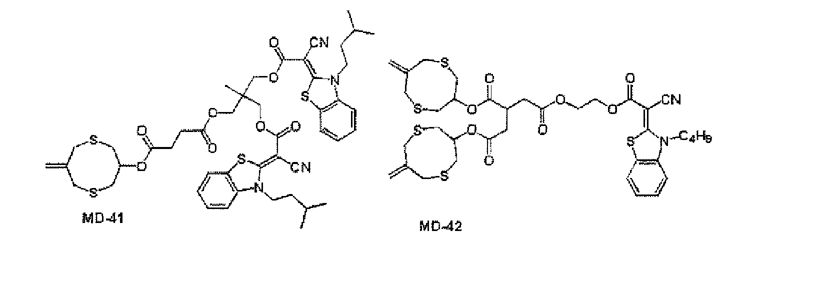

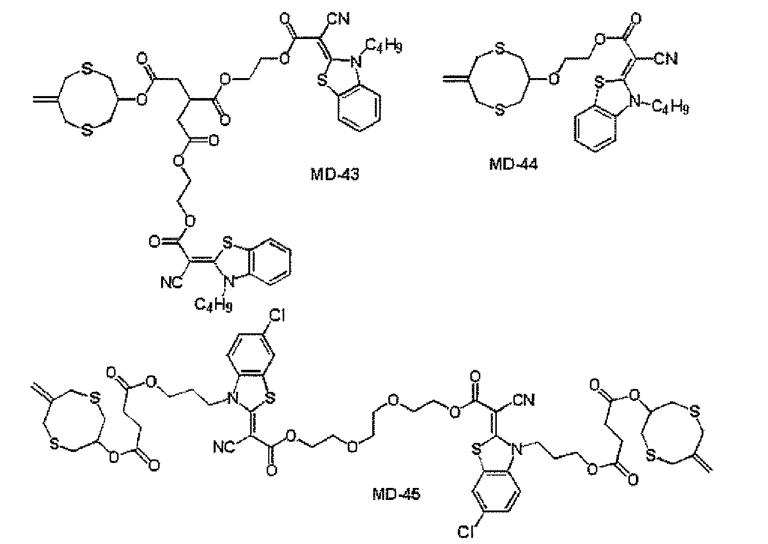

The synthesizing methods of the compounds represented by formulae (I), (II) and (III) are described in detail, for example, in Macromolecules, 1994, 27, 7935, Macromolecules, 1996, 29, 6983, Macromolecules, 2000, 33, 6722, and J. Polym. Sci., Part A, Polym. Chem., 2001,39,202.

The cyclic allylsulfide compounds may be used alone, or two or more kinds may be used in combination.

The content of the cyclic allylsulfide compound in the first curable resin composition for a cemented lens in the invention is not especially restricted, and it can be arbitrarily selected according to purposes, but the content is preferably 1% by mass to 99% by mass, more preferably 30% by mass to 98% by mass, and still more preferably 50% by mass to 98% by mass.

The content of thecyclic allylsulfide compound in the second curable resin composition for a cemented lens is not especially restricted, and can be arbitrarily selected according to purposes, but the content is preferably 1% by mass to 90% by mass, more preferably 30% by mass to 80% by mass, and still more preferably 50% by mass to 70% by mass.

### <(b) Radical polymerization initiator>

In the curable resin composition for a cemented lens in the invention, radical polymerization initiators are not especially restricted so long as they are initiators capable of generating radicals by light, radiation or heating, and photo-radical polymerization initiators are preferred in view of the efficiency of polymerization reaction.

As photo-radical polymerization initiators, e.g., the compounds described in JP-A-2009-29960, paragraph (0038) are exemplified, and these compounds may be used alone or in combination of two or more kinds.

As thermal radical polymerization initiators, 2,2'-azobis(4-methoxy-2,4-dimethylvaleronitrile), 2,2'-azobis(2,4-dimethylvaleronitrile) (V-65), 2,2'-azobisisobutyronitrile (AIBN), 2,2'-azobis(2-methylbutyronitrile), 1,1-azobis(cyclohexane-1-carbonitrile), 2,2'-azobis{2-methyl-N-[1,1-bis(hydroxymethyl)-2-hydroxyethyl]-propionamide, dimethyl-2,2'-axobis(2-methoxypropionate), benzoyl peroxide, and t-butyl peroxide are exemplified. Preferred are AIBN and V-65, and more preferred is AIBN. These compounds may be used alone or in combination of two or more kinds.

As a preferred photo-radical polymerization initiator, CI-HABI (2,2'-bis(o-chorophenyl)-4,4',5,5'-tetraphenyl-1,1-biimidazole) can be exemplified.

As a preferred photo-radical polymerization initiator, a compound represented by the following formula (IV) can also be exemplified. 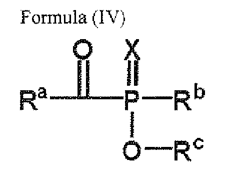 In formula (IV), each of R^{a}, R^{b} and R^{c} independently represents an alkyl group, an aryl group or a heterocyclic group; and X represents an oxygen atom or a sulfur atom.

The compound represented by formula (IV) will be described in detail below.

The alkyl group represented by each of R^{a}, R^{b} and R^{c} may be straight chain or branched, and may be unsubstituted or may have a substituent, The number of carbon atoms is preferably 1 to 30, and more preferably 1 to 20.

The examples of the alkyl groups represented by R^{a}, R^{b} and R^{c} include, e.g., a methyl group, an ethyl group, an n-propyl group, an isopropyl group, an n-butyl group, an isobutyl group, a t-butyl group, a pentyl group, a cyclopentyl group, a hexyl group, a cyclohexyl group, a heptyl group, an octyl group, a t-octyl group, a 2-ethylhexyl group, a decyl group, a dodecyl group, an octadecyl group, a 2,3-dibromopropyl group, an adamantyl group, a benzyl group, and a 4-bromobenzyl group. These groups may further have a substituent. Of these groups, from the point of stability against nucleophilic compounds, e.g., water and alcohol, an isopropyl group and a t-butyl group are especially preferred, and an isopropyl group is most preferred.

In formula (IV), the aryl group represented by R^{a}, R^{b} and R^{c} may be unsubstituted or may have a substituent. The number of carbon atoms is preferably 6 to 30, and especially preferably 6 to 20. The specific examples of such aryl groups include, e.g., a phenyl group, a naphthyl group, and an anthranyl group. These groups may further have a substituent.

In formula (IV), the heterocyclic group represented by R^{a}, R^{b} and R^{c} is preferably a 4-to 8-membered group, more preferably a 4- to 6-membered ring, and especially preferably a 5-or 6-membered ring. As the specific examples, a pyridine ring, a piperazine ring, a thiophene ring, a pyrrole ring, an imidazole ring, an oxazole ring and a thiazole ring are exemplified. Each of these rings may further have a substituent. Of the above heterocyclic rings, a pyridine ring is especially preferred.

In formula (IV), when the groups represented by R^{a}, R^{b} and R^{c} further have a substituent, as such a substituent, a halogen atom, an alkyl group, an alkenyl group, an alkoxy group, an aryloxy group, an alkylthio group, an alkoxycarbonyl group, an aryloxycarbonyl group, an amino group, an acyl group, an alkylaminocarbonyl group, an arylaminocarbonyl group, a sulfonamide group, a cyano group, a carboxy group, a hydroxy group, and a sulfonic acid group are exemplified. Of these groups, a halogen atom, an alkoxy group and an alkylthio group are especially preferred.

In formula (IV), X represents an oxygen atom or a sulfur atom, and preferably an oxygen atom.

R^{a} is preferably an aryl group, and more preferably the aryl group has the substituent at 2-position, or 2-position and 6-position. As the aryl group, an aryl group having an alkyl group, an aryl group, an alkoxy group, or a halogen atom at 2-position is more preferred, an aryl group having an alkyl group, an alkoxy group or a halogen atom at 2-position is still more preferred, an aryl group having an alkyl group, an aryl group, an alkoxy group, or a halogen atom at 2-position and 6-position is still further preferred, and an aryl group having an alkyl group, an alkoxy group, or a halogen atom at 2-position and 6-position is especially preferred. For example, R^{a} is preferably a 2-phenylmethyl group, a 2,4,6-trimethylphenyl group, a 2,6-dichlorophenyl group, a 2,6-dimethoxyphenyl group, or a 2,6-trifluoromethylphenyl group, and especially preferably a 2,4,6-trimethylphenyl group, a 2,6-dichlorophenyl group, or a 2,6-dimethoxyphenyl group. The reason having a substituent at 2-position, or 2-position and 6-position is preferred is that stability against nucleophilic compounds, e.g., water and alcohol, is improved, as described in Jacobi M. and Henne A., Polymers Paint Colour Journal, 1985, 175, 636.

R^{b} is preferably an alkyl group or an aryl group, and more preferably an alkyl group. Specifically, R^{b} is preferably an ethyl group, an isopropyl group, an isobutyl group, a t-butyl group, a phenyl group, or a pyridyl group, more preferably an ethyl group, an isopropyl group, a t-butyl group, or a phenyl group from the point of photodecomposition efficiency, and still more preferably a phenyl group.

R^{c} is preferably an alkyl group or an aryl group, and more preferably an aryl group. Specifically, R^{c} is preferably an ethyl group, an isopropyl group, an isobutyl group, a t-butyl group, a phenyl group, or a pyridyl group, more preferably an ethyl group, an isopropyl group, a t-butyl group, or a phenyl group from the point of photodecomposition efficiency, and still more preferably an isopropyl group.

As preferred embodiment of the compound represented by formula (IV), a compound in which R^{a} represents an aryl group having an alkyl group, an aryl group, an alkoxy group or a halogen atom at 2-position, R^{b} represents an aryl group, R^{c} represents an alkyl group, and X represents an oxygen atom or a sulfur atom can be exemplified. As more preferred embodiment, a compound in which R^{a} represents an aryl group having an alkyl group, an aryl group, an alkoxy group or a halogen atom at 2-position and 6-position, R^{b} represents an aryl group, R^{c} represents an alkyl group, and X represents an oxygen atom can be exemplified. As more preferred embodiment, a compound in which R^{a} represents a 2,6-dimethoxyphenyl group or a 2,6-dichlorophenyl group, R^{b} represents a phenyl group, R^{c} represents an ethyl group or an isopropyl group, and X represents an oxygen atom can be exemplified. As especially preferred embodiment, a compound in which R^{a} represents a 2,6-dimethoxyphenyl group, R^{b} represents a phenyl group, R^{c} represents an isopropyl group, and X represents an oxygen atom can be exemplified.

The specific examples of the compounds represented by formula (IV) are shown below. However, the invention is not restricted to these specific examples.

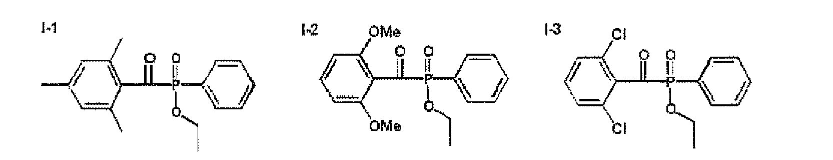

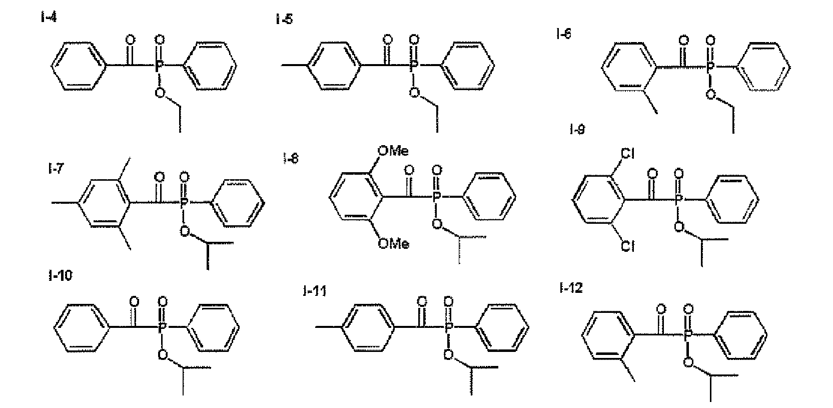

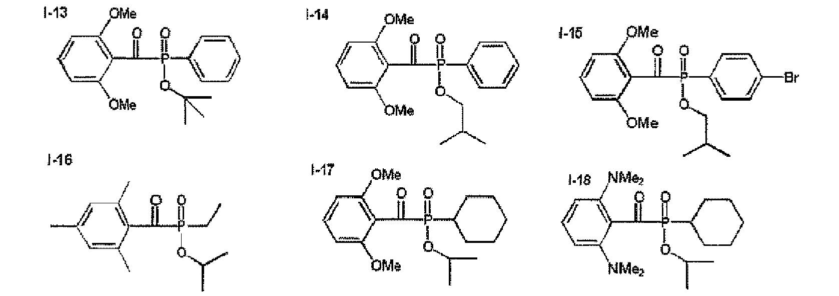

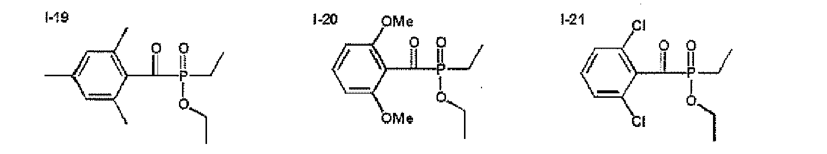

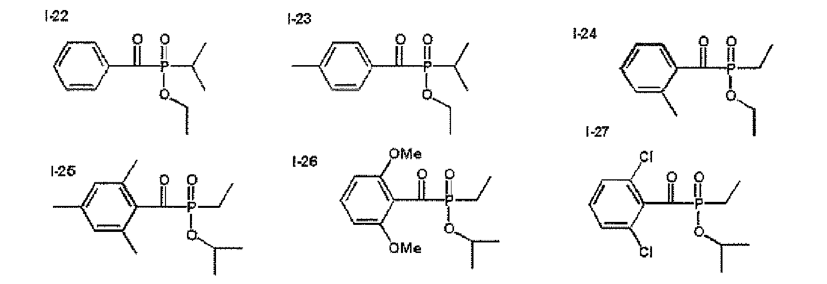

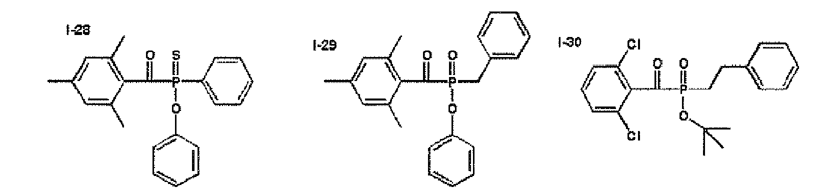

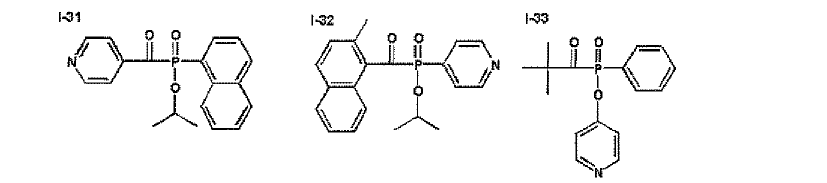

The synthesis method of the compound represented by formula (IV) is described in detail, e.g., in DE 2,830,927A1.

The content of a photopolymerization initiator in the curable resin composition for a cemented lens in the invention is preferably 0.01% by mass to 5% by mass of the curable resin composition, and more preferably 1% by mass to 3% by mass.

The use rate of a photopolymerization initiator to (a) compound represented by formula (I) is preferably 0.001 to 0.1 mol equivalent, and more preferably 0.005 to 0.05 mol equivalent.

<(c) Organic silicon compound having one or more silicon atoms bonded to hydrogen atom in one molecule>

The second curable resin composition for a cemented lens in the invention further contains an organic silicon compound having one or more silicon atoms bonded to a hydrogen atom in one molecule.

Organic silicon compounds having one or more silicon atoms bonded to a hydrogen atom in one molecule are described below. The compounds are not especially restricted so long as they are organic silicon compounds having one or more silicon atoms bonded to a hydrogen atom in one molecule, but from the viewpoint of difficultly of the occurrence of an outgassing problem, organic silicon compounds having two or more silicon atoms bonded to a hydrogen atom in one molecule are preferred. An effect of heightening of strength is also accompanied by the introduction of a crosslinking structure into the cured resin.

As the organic silicon compound having one or more silicon atoms bonded to a hydrogen atom in one molecule in the invention, the compounds disclosed in WO 96/15194 are exemplified, Specifically, low molecular weight compounds such as triethylsilane, tributylsilane, triphenylsilane, diphenylsilane, diethylsilane, 1,1,3,3-tetramethylsiloxane, pentamethyldisiloxane, 1,3,5,7-tetramethylcyclotetrasiloxane can also be used. In addition, the organic silicon compounds having one or more silicon atoms bonded to a hydrogen atom in one molecule disclosed in JP-A-2008-274270 can also be exemplified. Besides the above, the compounds shown in the catalogs of Gelest Inc. such as hydrogen-terminated polydimethylsiloxane (trade names: DMS-H03, DMS-H11, DMS-H21, DMS-H25, DMS-H31, DMS-H41), methylhydrosiloxane-dimethylsiloxane polymers (trade names: HMS-013, HMS-031, HMS-064, HMS-071, HMS-082, HMS-151, HMS-301, HMS-501), trimethylsiloxane- terminated polymethylhydrosiloxane (trade names: HMS-991, HMS-992, HMS-993), and hydrogen-terminated anethylhydrosiloxane-phenylmethylsiloxane copolymer (trade name: HPM-502) are also exemplified.

Of the above compounds, as the organic silicon compounds having two or more silicon atoms bonded to a hydrogen atom in one molecule, e.g., diphenylsilane, diethylsilane, 1,1,3,3-tetramethylsiloxane, pentamethyldisiloxane, 1,3,5,7-tetramethylcyclotetrasiloxane are preferably exemplified, and1,1,3,3-tetramethylsiloxane, pentamethyldisiloxane, and 1,3,5,7-tetramethylcyclotetrasiloxane are more preferred.

The organic silicon compounds having one or more silicon atoms bonded to a hydrogen atom in one molecule may be used alone, or they may be used in combination with other organic silicon compounds having one or more silicon atoms bonded to a hydrogen atom in one molecule.

The mixing ratio of the organic silicon compound having one or more silicon atoms bonded to a hydrogen atom in one molecule is not especially restricted, but considering the strength of the cured resin obtained according to the invention, the addition amount of the silicon compound is preferably equivalent to the amount of the compound represented by formula (I), (II) or (III) or less.

### <(d) Hydrosilylation reaction catalyst>

It is preferred for the second curable resin composition for a cemented lens in the invention to further contain a hydrosilylation reaction catalyst.

The hydrosilylation reaction catalyst is not especially restricted so long as it has catalytic activity of hydrosilylation reaction. For example, as the examples of hydrosilylation reaction catalysts, a simple substance of platinum; solid platinum carried on a carrier such as alumina, silica, or carbon black; chloroplatinic acid; a complex of chloroplatinic acid with alcohol, aldehyde, or ketone; a platinum-olefin complex (e.g., Pt(CH₂=CH₂)₂(PPh₃)₂, Pt(CH₂=CH₂)₂Cl₂); a platinum-vinylsiloxane complex (e.g., Pt(ViMe₂SiOSiMe₂Vi)ₐ, Pt[(MeViSiO₄)₄]_{b}); a platinum-phosphine complex (e.g., Pt(PPh₃)₄, Pt(PBu₃)₄); and a platinum-phosphite complex (e.g., Pt[P(OPh) ₃] ₄, P[P(OBu) ₃] ₄) (wherein Me is a methyl group, Bu is a butyl group, Vi is a vinyl group, Ph is a phenyl group, and each of a and b is an integer); dicarbonyldichloroplatinum, Karstedt catalyst; platinum-hydrocarbon complex compounds disclosed in Ashby's U.S. Patents 3,159,601 and 3,159,662; and platinum alcoholate catalysts disclosed in Lamoreaux's U.S. Patent 3,220,972 are exemplified. Platinum chloride-olefin complex compounds disclosed in Modic's U.S. Patent 3,516,946 are also useful in the invention.

As the examples of catalysts other than platinum, RhCl(PPh)₃, RhCl₃, RhAl₂O₃, RuCl₃, IrCl₃, FeCl₃, AlCl₃, PdCl₂·2H₂O, NiCl₂, and TiCl₄ are exemplified.

Of these catalysts, in view of catalytic activity, chloroplatinic acid, a platinum-olefin complex and a platinum-vinylsiloxane complex are preferred. These catalysts may be used alone, or two or more kinds may be used in combination.

The addition amount of hydrosilylation reaction catalyst is not especially restricted, but the amount is preferably 500 to 0.1 ppm to the composition converted to mass of platinum metal atom, more preferably 100 to 1 ppm, and most preferably 50 to 5 ppm.

It is possible to use a cocatalyst in combination with these catalysts. As the cocatalysts, e.g., sulfur compounds such as a simple substance of sulfur, and amine compounds such as triethylamine.

The addition amount of cocatalyst is not especially restricted, but is preferably the greatest lower bound of 10⁻² mols and the least upper bound of 10² mols per mol of the hydrosilylation catalyst, and more preferably the greatest lower bound of 10⁻¹ mols and the least upper bound of 10 mols,

Use ratio of (d) hydrosilylation reaction catalyst to (a) compound represented by formula (I) is preferably the greatest lower bound of 10⁻¹⁰ mols and the least upper bound of 10⁻¹ mols per mol of the compound represented by formula (I), and more preferably the greatest lower bound of 10⁻⁹ mols and the least upper bound of 10⁻⁴ mols.

### <Other components>

For the purpose of improving the storage stability of the curable resin composition, a polymerization inhibitor and antioxidant may be added to the curable resin composition for a cemented lens in the invention, if necessary.

As the polymerization inhibitor or antioxidant, the compounds disclosed, for example, in JP-A-2009-29960, paragraph (0046) are exemplified.

The addition amount of the polymerization inhibitor or antioxidant is preferably 3% by mass or less of the total amount of the cyclic allylsulfide compound. When the addition amount exceeds 3% by mass, polymerization slows down, or polymerization becomes impossible in an extreme case.

For heightening hardness, the curable composition of the invention can contain other polymerizable monomer together with the cyclic allyisulfide compound in the invention. When the cyclic allylsulfide compound of the invention and other polymerizable monomer are used in combination, the content of the polymerizable monomer to be used in combination in the total curable composition is preferably 50% by mass or less.

As the examples of other monomers to be used in combination, for example, the compounds disclosed in JP-A-2008-195616, paragraph [0063] are exemplified.

An inorganic filler may be added to the curable resin composition for a cemented lens in the invention, if necessary. The addition of an inorganic filler is effective in high strengthening and improvement of incombustibility of the material. As the inorganic fillers, particles are preferred, and alumina, aluminum hydroxide, fused silica, crystalline silica, super fine amorphous silica, hydrophobic super fine silica, talc, and barium sulfate can be exemplified. For adding fillers, a method of adding a hydrolysable silane monomer or oligomer such as alkoxy silane, acyloxy silane or halogenated silane, or alkoxide, acyloxide or halide of a metal such as titanium or aluminum to the curable composition of the invention to perform reaction in the composition or the partial reactant of the composition, whereby generating inorganic fillers in the composition can be exemplified. The amount of an inorganic filler in the curable composition is preferably 10% by mass to 60% by mass.

It is also possible to contain a modified epoxy material with the cyclic allylsulfde compound in the invention as the curable resin composition for a cemented lens in the invention for the purpose of increasing hardness. The specific examples of such compounds are described in detail in JP-A-2008-255295 and JP-A-2008-266485. The amount of the modified epoxy material in the total curable composition is preferably 10% by mass to 70% by mass.

Further, for increasing hardness, the curable composition for a cemented lens in the invention can also contain an organic silicon compound having one or more silicon atoms bonded to a vinyl group in one molecule together with the cyclic allylsulfide compound of the invention. The specific examples thereof are described in detail in JP-A-2008-227119, In addition, vinyl-terminated polydimethylsiloxane shown in the foregoing catalogs of Gelest Inc. (trade names: DMS-V00, DMS-V03. DMS-V05, DMS-V21, DMS-V22, DMS-V25, DMS-V31, DMS-V33, DMS-V35) are exemplified. The content of the organic silicon compound having one or more silicon atoms bonded to a vinyl group in one molecule in the total curable composition is preferably 1% by mass to 30% by mass.

### (Manufacturing method of cured resin)

Methods for obtaining a cured resin by curing the curable resin composition for a cemented lens of the invention are not especially restricted, but a method of performing at least one of irradiation with light (e.g., UV-ray irradiation) and irradiation with heat can be exemplified. That is, reaction can be carried out by performing either one of irradiation with light or irradiation with heat (heating), or reaction can be effected by performing irradiation with light and then further heating.

When curing reaction is performed by heating, the temperature may be raised at a stretch, but it is preferred to maintain a low temperature for certain time and complete thermal radical polymerization.

With respect to the wavelength to cause photo-radical polymerization, any wavelength may be applied so long as a photo-radical polymerization initiator is capable of reaction. Specific wavelength such as a laser may be used in irradiation or, alternatively, light of a broad range such as a halogen or xenon lamp may be used in irradiation. In particular, since transmittance becomes a problem in the case of being used for a lens, it is preferred to use a polymerization initiator capable of causing polymerization with a short wavelength light.

The reaction temperature of radical polymerization reaction is not especially restricted. The temperature may be in the vicinity of room temperature in the case of photo-radical polymerization, and the polymerization reaction is preferably performed in the range of 50°C to 120°C in the case of thermal radical polymerization.

When the curable resin composition for a cemented lens is the second curable resin composition for a cemented lens, curing of the curable resin composition for a cemented lens preferably includes a process of addition polymerization of the curable resin composition in the presence of a hydrosilylation reaction catalyst after performing radical polymerization. The model scheme thereof is shown below.

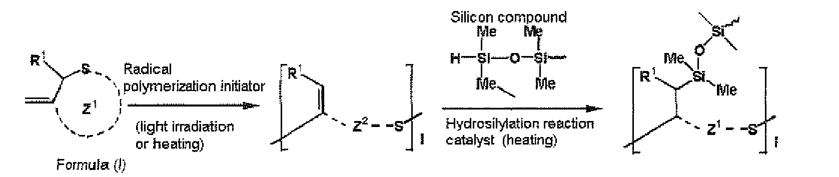

In the above formulae, R¹ represents a hydrogen atom or an alkyl group, Z¹ represents a cyclic structure together with the two carbon atoms and the sulfur atom, Z² represents a linking group formed by atomic groups other than two carbon atoms and a sulfur atom in the case where Z¹ opens the ring, and I represents the number of the repeating unit.

In the second curable resin composition for a cemented lens, when curing reaction is performed by heating, the temperature may be raised at a stretch, but it is preferred to maintain a low temperature for certain time and complete thermal radical polymerization, and then effect hydrosilylation reaction at a high temperature. Further, it is also preferred to complete hydrosilylation at a high temperature after performing photo-radical polymerization by light irradiation at a low temperature.

The reaction temperature of hydrosilylation is not especially restricted, but is preferably the greatest lower bound of 100°C and the least upper bound of 300°C, and more preferably the greatest lower bound of 120°C and the least upper bound of 260°C.

The curing reaction may be carried out at a constant temperature, but the temperature may be changed multistage-wise or continuously, according to necessity. It is preferred to perform reaction by increasing temperature multistage-wise or continuously from the point of capable of easily obtaining a uniform cured resin free from distortion rather than performing at a constant temperature.

### (Imaging lens)

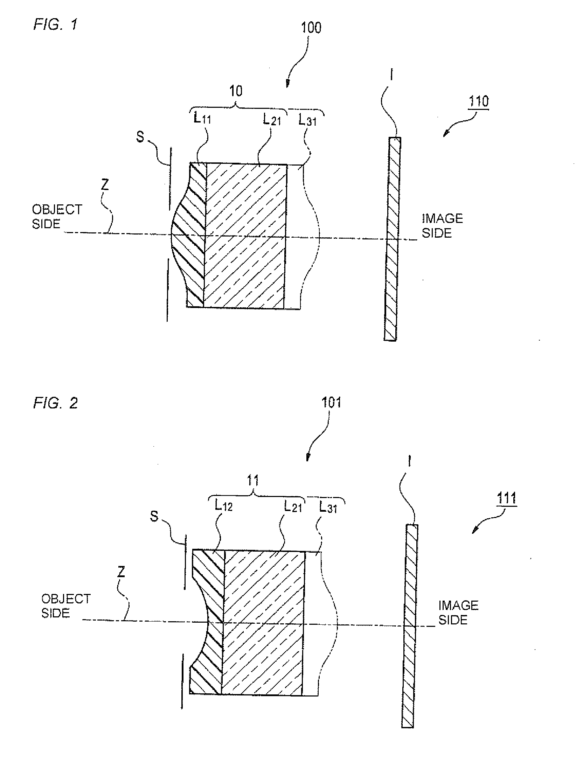

As shown in the schematic block diagram in Fig. 1, imaging apparatus 110 comprises, from the object side to the image side, diaphragm S, imaging lens 100 according to the embodiment of the invention, and imaging element 1 such as CCD or the like, with optical axis Z as the center.

Imaging lens 100 is equipped with cemented lens 10, and cemented lens 10 comprises first lens L₁₁ on the object side and second lens L₂₁ on the image side cemented to each other.

First lens L₁₁ is a plano-convex lens, whose object side surface is convex toward the object side, and is formed from the cured resin of the curable resin composition for a cemented lens. As described above, the polymer of the compound represented by formula (I) in the curable resin composition for a cemented lens has a high adhering property to the glass material, accordingly tight adhesion of first lens L₁₁ and second lens L₂₁ can be sufficiently maintained without using an adhesive.

Second lens L₂₁ is formed of a plane parallel glass plate. Known glass materials can be used with no restriction, but considering to be subjected to reflowing treatment, those having a high softening temperature (e.g., 500°C to 850°C) are preferred. For example, optical glass BK7 manufactured by OHARA Inc. can be preferably used.

Incidentally, there is a case where a plane parallel glass plate is not called a lens, but a plane parallel glass plate is thought to correspond to the case where the radius of curvature of a lens surface is infinity, and so it is to be included in the concept of the lens in the specification of the invention.

Cemented lens 10 can be obtained, for example, by coating a curable resin composition for a cemented lens on second lens L₂₁, and then carrying out the curing treatment (refer to the foregoing section (Manufacturing method of cured resin)) in a state of accommodating the curable resin composition coated on second lens L₂₁ in a mold corresponding to the shape of first lens L₁₁. Alternatively, as a method of not using a mold, after curing the curable resin composition for a cemented lens coated on second lens L₂₁, a method of polishing the cured resin to become the shape of first lens L₁₁ is exemplified.

The shapes of first lens L₁₁ and second lens L₂₁ can be arbitrarily changed according to the use of imaging lens 100. Variation examples of imaging lenses 100 are shown below. With respect to the members explained with reference to the above shown drawings, explanations are simplified or omitted by attaching the same signs or corresponding signs to the figure. Incidentally, in the following variation examples, the manufacturing method of the cemented lens described in the exemplary embodiment in Fig. 1 is similarly applicable.

As shown in the schematic block diagram in Fig. 2, imaging apparatus 111 comprises, from the object side toward the image side, diaphragm S, imaging lens 101 According to the embodiment of the invention, and imaging element I, with optical axis Z as the center.

Imaging lens 101 is equipped with cemented lens 11, and cemented lens 11 comprises first lens L₁₂ on the object side and second lens L₂₁ on the image side cemented to each other.

First lens L₁₂ is a plano-concave lens, whose object side surface is concave toward the object side, and is formed from the cured resin of the curable resin composition for a cemented lens.

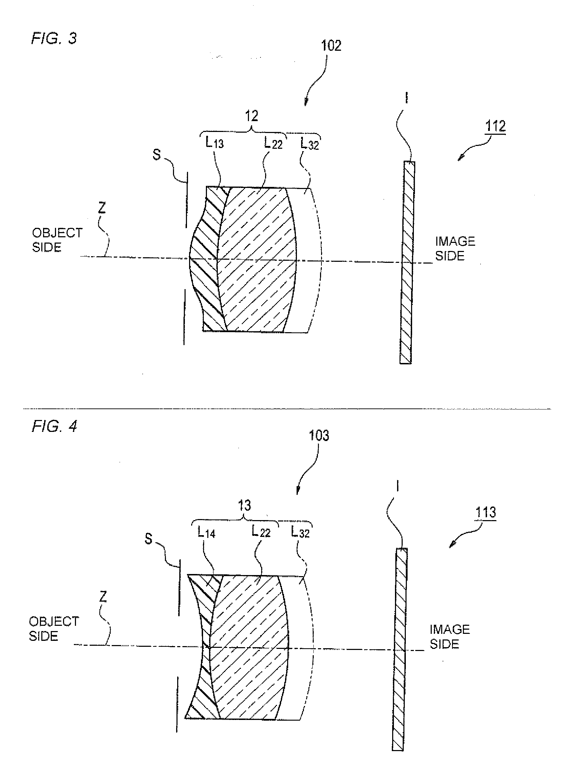

As shown in the schematic block diagram in Fig. 3, imaging apparatus 112 comprises, from the object side toward the image side, diaphragm S, imaging lens 102 according to the embodiment of the invention, and imaging element I, with optical axis Z as the center.

Imaging lens 102 is equipped with cemented lens 12, and cemented lens 12 comprises first lens L₁₃ on the object side and second lens L₂₂ on the image side cemented to each other.

First lens L₁₃ is a lens whose object side surface is convex toward the object side, and is formed from the cured resin of the curable resin composition for a cemented lens.

Second lens L₂₂ is formed of a biconvex glass plate. Known glass materials can be used with no restriction, but considering to be subjected to reflowing treatment as described above, those having a high softening temperature are preferred.

As shown in the schematic block diagram in Fig. 4, imaging apparatus 113 comprises, from the object side toward the image side, diaphragm S, imaging lens 103 according to the embodiment of the invention, and imaging element I, with optical axis Z as the center.

Imaging lens 103 is equipped with cemented lens 13, and cemented lens 13 comprises first lens L₁₄ on the object side and second lens L₂₂ on the image side cemented to each other.

First lens L₁₄ is a lens whose object side surface is concave toward the object side, and is formed from the cured resin of the curable resin composition for a cemented lens.

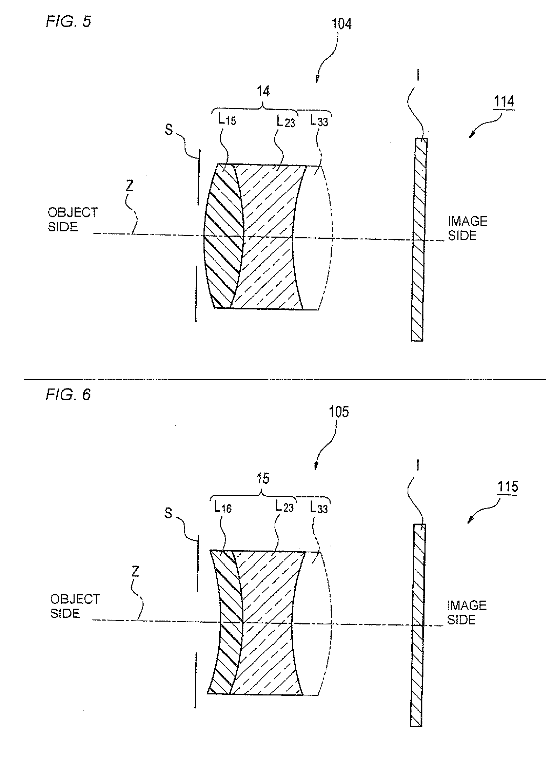

As shown in the schematic block diagram in Fig. 5, imaging apparatus 114 comprises, from the object side toward the image side, diaphragm S, imaging lens 104 according to the embodiment of the invention, and imaging element 1, with optical axis Z as the center.

Imaging lens 104 is equipped with cemented lens 14, and cemented lens 14 comprises first lens L₁₅ on the object side and second lens L₂₃ on the image side cemented to each other.

First lens L₁₅ is a lens whose object side surface is convex toward the object side, and is formed from the cured resin of the curable resin composition for a cemented lens.

Second lens L₂₃ is formed of a biconcave glass plate. Known glass materials can be used with no restriction, but considering to be subjected to reflowing treatment as described above, those having a high softening temperature are preferred.

As shown in the schematic block diagram in Fig. 6, imaging apparatus 115 comprises, from the object side toward the image side, diaphragm S, imaging lens 105 according to the embodiment of the invention, and imaging element I, with optical axis Z as the center.

Imaging lens 105 is equipped with cemented lens 15, and cemented lens 15 comprises first lens L₁₆ on the object side and second lens L₂₃, on the image side cemented to each other.

First lens L₁₆ is a lens whose object side surface is concave toward the object side, and is formed from the cured resin of the curable resin composition for a cemented lens.

As shown by a dashed line in each of Figs. 1 to 6, cemented lenses 10 to 15 may further have third lenses L₃₁ to L₃₃ on the image sides of second lenses L₂, to L₂₃. Third lenses L₃₁ to L₃₃ are lenses whose object side surfaces convex toward the object side of the third lenses, and they are formed from the cured resin of the curable resin composition for a cemented lens. In cemented lenses 10 and I 1 of them, third lens L₃₁ is a plano-convex lens having a convex surface facing the image side of the third lens.

In the above-described embodiments, the object side surface of the first lens and the image side surface of the third lens may be aspheric surfaces.

Further, at least one surface of the second lens may be subjected to coating treatment. Any known coating treatment may be adopted. For example, coating treatment for reducing the reflection of light in the interface between the second lens and the first lens (and/or the third lens) may be performed.

In the above embodiments, imaging lenses 100, 101, 102, 103, 104 and 105 are respectively cemented lenses 10, 11,12, 13, 14 and 15 themselves. The imaging lens of the invention includes the form of an imaging lens being a cemented lens itself like this.

On the other hand, the imaging lens in the invention may be modules further having known members other than cemented lens (for example, other lenses, cases, and the like).

### (Manufacture of wafer level lens according to imprinting method)

The invention also relates to a manufacturing method of a wafer level lens according to an imprinting method.

In the method, a first substrate provided with a plurality of pits and a copying jig having a plurality of transfer parts are prepared.

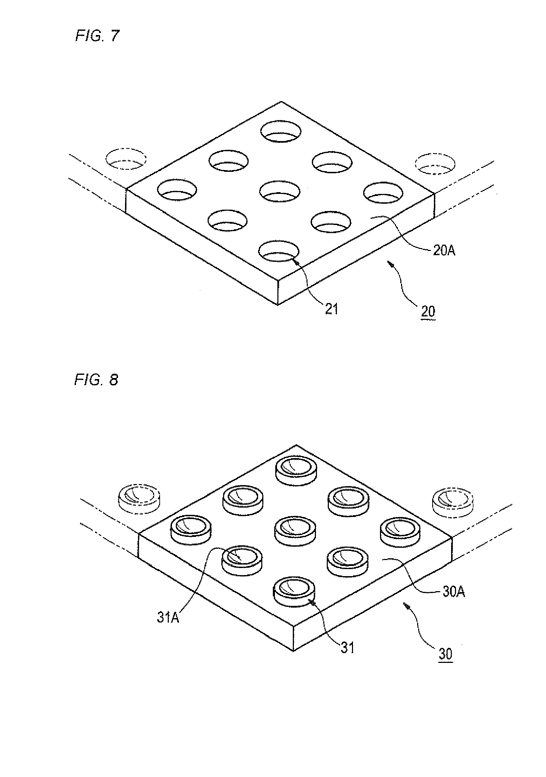

For example, as shown in the partial oblique view in Fig. 7, a plurality of pits 21. (first pit) having a cylindrical shape are arranged on one face 20A of glass substrate 20 (first substrate) at prescribed intervals. Pit 21 is a part to accommodate the curable resin composition for a cemented lens.

The thickness of glass substrate 20 is not especially restricted and arbitrarily selected according to the use of the cemented lens. For example, when a cemented lens is intended to be mounted on a portable telephone, the thickness is generally in the range of 0.3 mm to 0.5 mm.

The depth of pit 21 is decided on the basis of the size of the first lens of a cemented lens. For examples, in Fig. 7, the depth of pit 21 is a half or so of the thickness of glass substrate 20.

Also, as shown in the partial oblique view in Fig. 8, on one face 30A of plate member 30 (first copying jig) are arranged a plurality of protrusions 31 (transfer part) having a cylindrical shape at the same intervals as the prescribed intervals described above. Protrusions 31 of copying jig 30 are formed to be capable of entering into pits 21 of glass substrate 20. The height of protrusion 31 is a half or so of the depth of pit 21.

The materials of plate member 30 are not especially restricted in the range of capable of achieving the later-described imprinting method. For example, metals, ceramics, or UV ray-transmitting materials not so highly adhesive to the cured resin are arbitrarily selected.

The shape of the upper face of protrusion 31 1 corresponds to the shape of the lens formed of the curable resin composition for a cemented lens. For example, for obtaining cemented lens 10 shown in Fig. 1, concavity 31A is provided in the center area of the upper face 31A of protrusion 31 so as to coincide with the object side surface of first lens L₁₁.

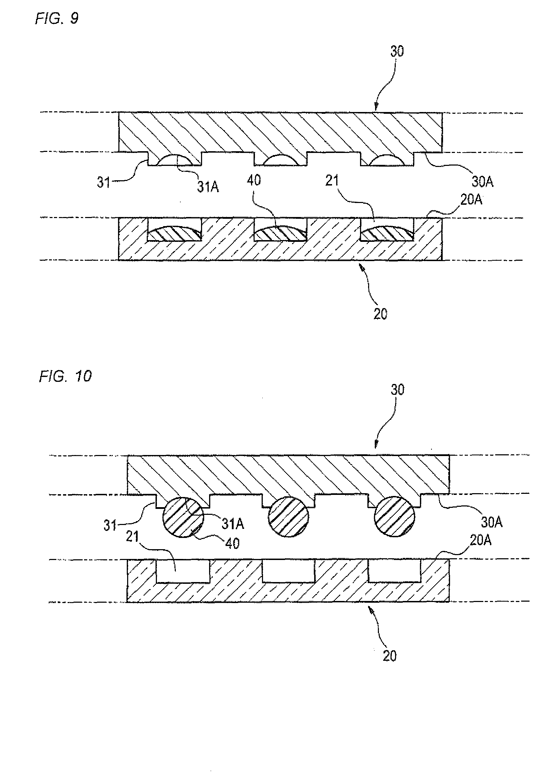

In the next place, the curable resin composition for a cemented lens is arranged between pit 21 of glass substrate 20 and protrusion 31 of plate member 30. More specifically, for example, as shown in the schematic sectional view in Fig. 9, a prescribed amount of curable resin composition for a cemented lens 40 is arranged in pit 21 of glass substrate 20. Alternatively, when a prescribed amount of curable resin composition for a cemented lens 40 can be retained in concavity 31A of plate member 30, as shown in Fig. 10, curable resin composition for a cemented lens 40 may be arranged in concavity 31A of plate member 30.

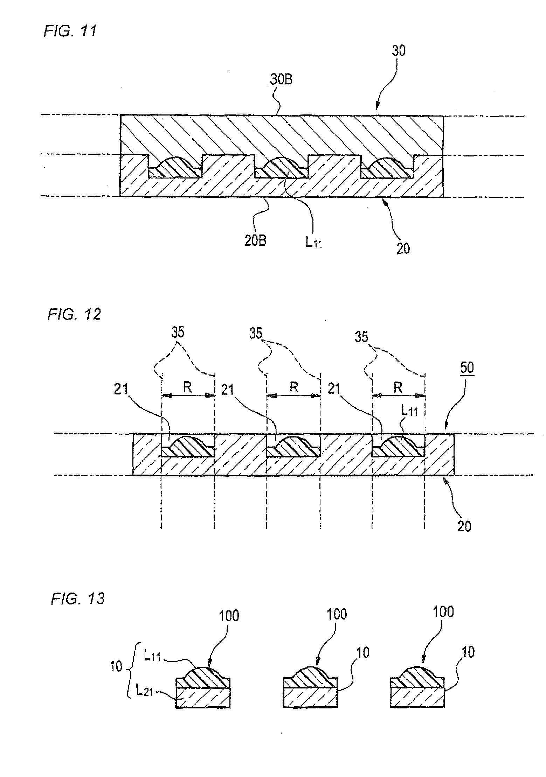

After that, as shown in Fig. 11, plate member 30 and glass substrate 20 are made to abut on each other and the shape of protrusion 31 of plate member 30 is transferred to curable resin composition for a cemented lens 40. Curable resin composition for a cemented lens 40 is subjected to curing treatment (refer to the foregoing item [Manufacturing method of cured resin]), whereby first lens L₁₁ is manufactured.

When irradiation with light is adopted as curing treatment, and when a UV-ray-transmitting material not so highly adhesive to a cured resin is used as plate member 30, it is preferred to emit UV-ray toward at least one of other face 30B of plate member 30 (opposite face to face 30A) and other face 20B of glass substrate 20 (opposite face to face 20A). On the other hand, when a material not transmitting UV-ray is used as plate member 30, it is preferred to emit UV-ray toward face 20B of glass substrate 20.

When irradiation with heat is adopted as curing treatment, although the material of plate member 30 and the direction of heat irradiation are not especially restricted, there are cases where curing reaction can be done more effectively by using materials having high heat transfer (metals, ceramics, and the like) as plate member 30, and performing heat irradiation at least toward face 30B of plate member 30.

As methods of adopting irradiations with both light and heat as curing treatment, (I) a method of performing irradiations with light and then heat, (2) a method of irradiations with heat and then light, and (3) a method of irradiations with light and heat at the same time can be exemplified.

Each of irradiations with light and heat in the above methods (1) and (2) is as described above.

As method (3), a method of performing irradiations with both light and heat toward either one direction of face 30B of plate member 30 or face 20B of glass substrate 20, and a method of irradiation with light toward one direction of face 30B and face 20B, and irradiation with heat toward other faces of face 30B and face 20B are exemplified. In the latter method, when a material having high heat transfer or a material not transmitting UV-ray is used as plate member 30, it is preferred to perform emission of light toward face 20B and emission of heat toward face 30B.

Subsequently, as shown in Fig. 12, plate member 30 is relatively released from glass substrate 20 to manufacture cemented body 50 having glass substrate 20 and many first lenses L₁₁. After that, cemented body 50 is cut in the thickness direction (direction along dotted line 35) such that the region containing each of first lenses L₁₁ (e.g., region R) is segmented to obtain second lens L₂₁ cemented to first lens L₁₁ from glass substrate 20, whereby a plenty of imaging lenses 100 equipped with cemented lens 10 are manufactured at the same time as shown in Fig. 13.

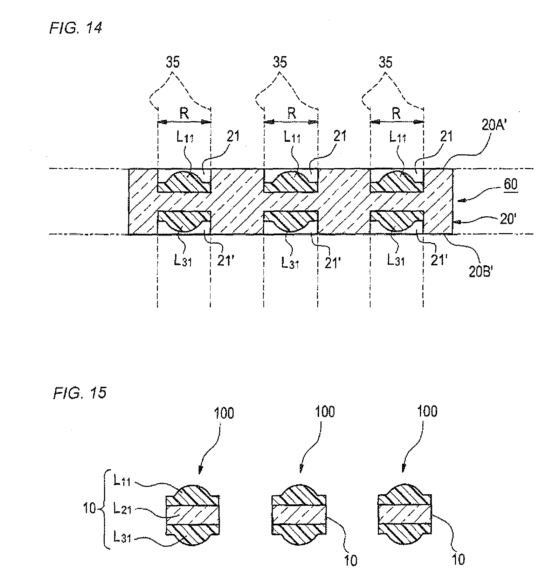

It is also possible to use glass substrate 20' as shown in Fig. 14 in place of glass substrate 20. Similarly to glass substrate 20, a plurality of pits 21' (second pit) having a cylindrical shape are arranged on one face 20A' of glass substrate 20' at prescribed intervals. In addition, on other face 20B', a plurality of pits 21' are also provided on the positions respectively corresponding to the above pits 21'.

When glass substrate 20' is used, it is also possible to manufacture cemented body 60 comprising glass substrate 20' having a plenty of first lenses L₁₁ on one face 20A' and a plenty of third lenses L₃₁ on other face 20B' of glass substrate 20 by using a plate member (second copying jig) (not shown in the fig.) which is the same with or similar kind to plate member 30 (first copying jig) and similarly performing the explained operation with referring to Figs. 9 to 11 to pit 21' on other face 20B' of glass substrate 20'.

In the next place, cemented body 50 is cut in the thickness direction (direction along dotted line 35) such that the region containing each of first lenses L₁₁ (e.g., region R, region R also includes corresponding third lens L₃₁) is segmented to obtain second lens L₂₁ cemented to first lens L₁₁ and third lens L₃₁, from glass substrate 20', whereby a plenty of imaging lenses 100 equipped with cemented lens 10 are manufactured at the same time as shown in Fig. 15.

Further, before the cutting process of a cemented body, cemented bodies 50 and 60 may further have a plate member cemented to the face on the first lens side (in cemented body 60, at least one of the face on first lens L₁₁ side and the face on third lens L₃₁ side) of cemented bodies 50 and 60.

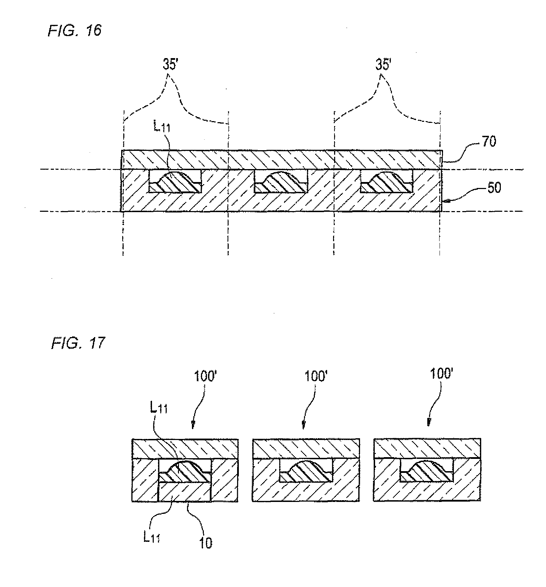

For example, as shown in Fig. 16, cemented body 50 further has glass substrate 70 as the plate member cemented to the face on first lens L₁₁ side.

After that, by cutting the cemented body in the direction along dotted line 35', a plenty of modular imaging lenses 100' equipped with cemented lens 10 can be manufactured at the same time, as shown in Fig. 17.

lncidentally, plate members are not especially restricted so long as they can be cemented to a cemented body. For example, other cemented bodies 50 and 60 may be used as plate members.

The above materials, shapes, configurations, numbers, and places to be arranged of various members exemplified in the embodiments are arbitrary and not restrictive so long as they can achieve the invention.

### Examples

The invention will be described with reference to examples, but the invention is not restricted to the exemplary embodiments.

### <Synthesis of compound (monomer) represented by formula (I)>

Exemplified compounds M-17, M-18, M-34, M-36, M-44, M-45, M-46, MD-1 and MD-2 are synthesized according to the methods described in J. Polym. Sci., Part A Polym. Chem, 2001, 39,202 by the following reaction schemes (R represents a methyl group in the syntheses of M-17 and M-44, a phenyl group in the synthesis of M-18, a hydrogen atom in the syntheses of M-34 and M-36, a 2-bromophenyl in the synthesis of M-45, and a 2,4-dichlorophenyl in the synthesis of M-46). Syntheses are carried out in similar methods except for changing the starting materials. Cyclic allylsulfide compounds having various substituents can be synthesized by changing the substituents of starting materials.

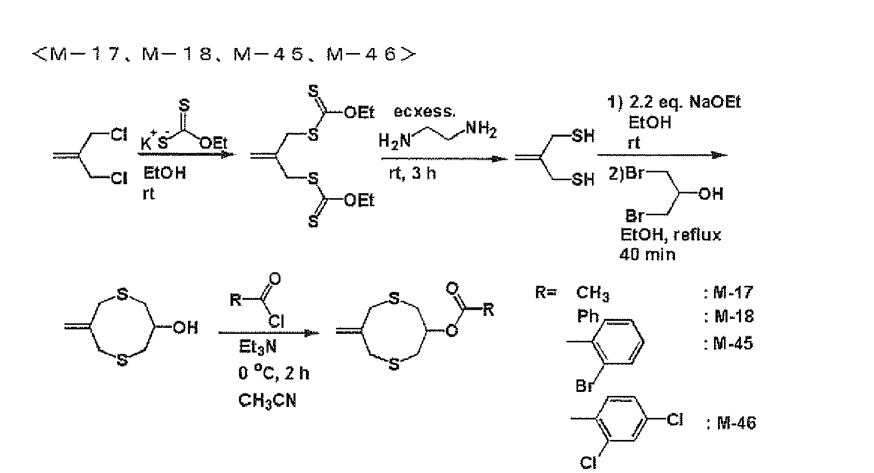

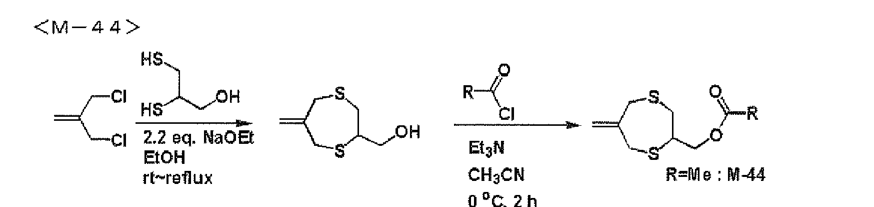

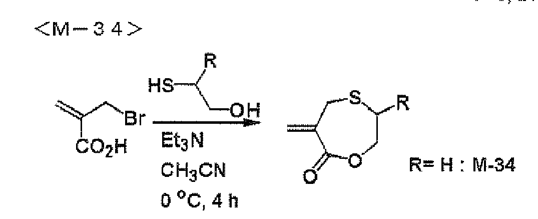

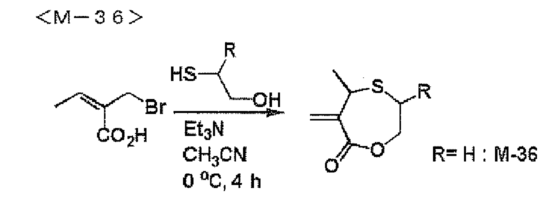

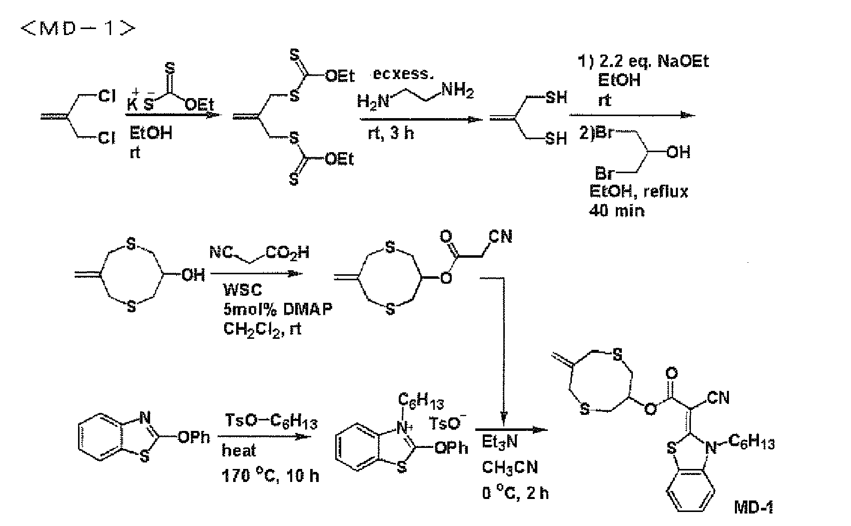

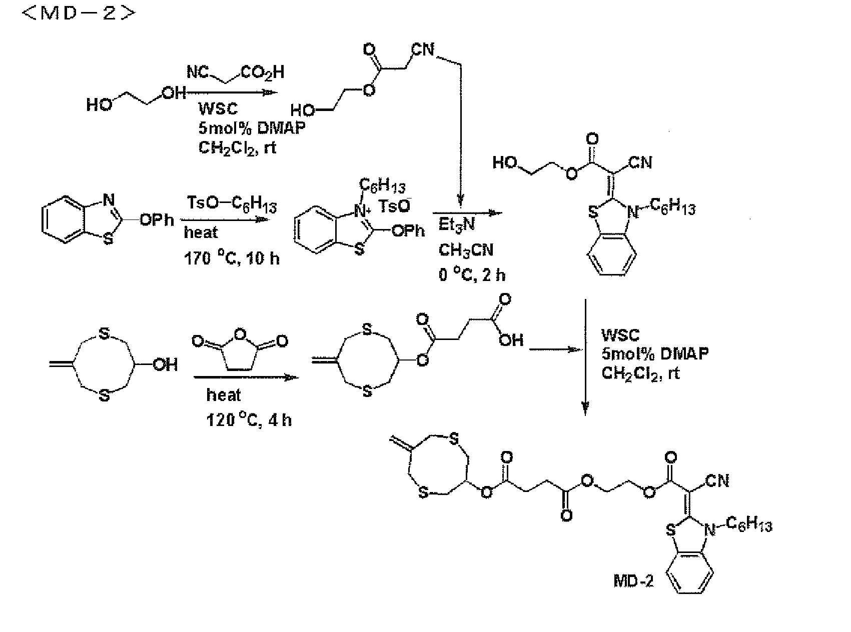

DMAP: 4-Dimethylaminopyridine
WSC: 1-Ethyt-3-(3-dimefhylaminopropyl)carbodiimide hydrochloride

Data of the obtained physical properties are shown below.
M-17: ¹H-NMR (300 MHz, CDCl₃) δ2.00 (s, 3H), 3.05 (m, 4H), 3.21 (s, 4H), 4.95 (m, 1H), 5.20 (s, 2H)
M-18: ¹H-NMR (300 MHz, CDCl₃) 83.16 (d, 2H), 3.1.8 (d, 2H), 3.23 (s, 4H), 5.20 (s, 2H), 5.20 (m, 1H), 7.30 (m, 3H), 8.0 (m, 3H)
M-45: ¹H-NMR (300 MHz, CDCl₃) δ3.16 (d, 2H), 3.18 (d, 2H), 3.24 (s, 4H), 5.20 (s, 2H), 5.22 (m, 1H). 7.36 (m, 2H), 7.79 (dd,1H), 7.80 (dd, 1H)
M-46: ¹H-NMR (300 MHz, CDCl₃) δ3.16 (d, 2H), 3.18 (d, 2H), 3.24 (s, 4H), 5.20 (s, 2H), 5.20 (m, 1H), 7.30 (dd, 1H), 7.48 (d, 1H), 7.79 (d, 1H)
M-44: ¹H-NMR (300 MHz, CDCl₃) δ2.00 (s, 3H), 2.80-3.80 (m, 7H), 4.10-4.30 (m, 2H), 4.85 (d, 2H)
M-34: ¹H-NMR (300 MHz, CDCl₃) δ2.95 (m, 2H), 2.36 (s, 2H), 4.50 (m, 2H), 5.60 (s, 1H), 5.85 (s, 1H)
M-36: ¹H-NMR (300 MHz, CDCl₃) δ1.54 (d, 3H), 2.92-3.10 (m, 2H), 3.59 (dd, 1H), 4.51 (t, 2H), 5.51 (s, 1H), 5.63 (s, 1H)
MD-1: ¹H-NMR (300 MHz, CDCl₃) δ1,01 (t, 3H), 1.53 (dd, 2H), 1.87-1.99 (m, 2H), 3.07 (dd, 4H), 3.18-3.33 (m, 4H), 4.62 (dd, 2H), 5.09-5.19 (m, 1H), 5.26 (s, 2H), 7.25-7.34 (m, 2H), 7.47 (t, 1H), 7.68 (d, 1H) [λₘₐₓ=341.0, ε=40859 (in CH₂Cl₂)]
MD-2: ¹H-NMR (300 MHz, CDCl₃) δ1.02 (t, 3H), 1.56 (dd, 2H), 1.90-2.00 (m, 2H), 2.62-2.71 (m, 4H), 3.08 (dd, 4H), 3.24 (s, 4H), 4.39-4.49 (m, 4H), 4.60 (dd, 2H), 5.01-5.09 (m, 1H), 5.23 (s, 2H), 7.29-7.34 (m, 2H), 7.47 (t, 1H), 7.69 (d, 1H) [λₘₐₓ=341.0, ε=41139 (in CH₂Cl₂)]

### <Sample 1-101: first curable resin composition for a cemented lens of the invention>

· Cyclic allylsulfide compound: M-17 (synthesized product) 50 g
· Radical polymerization initiator: AIBN (manufactured by 1 g Wako Pure Chemical Industries)

Sample 1-101 is produced as the first curable resin composition for a cemented lens of the invention by mixing the above composition in a glove box in the nitrogen atmosphere. Further, Samples 1-102 and 1-103 are prepared by replacing the cyclic allylsulfide compound as shown in Table I below in an equivalent mass.

**TABLE 1**

| Curable Resin Composition | Cyclic Allylsulfide Compound | Radical Polymerization Initiator |
|---|---|---|
| 1-101 | M-17 | AIBN |
| 1-102 | M-18 | AIBN |
| 1-103 | M-36 | AIBN |

### <Sample 1-104: curable resin composition for cemented lens in comparative example (silicone-based)>

As Sample 1-104, comparative curable resin composition for cemented lens (silicone-based), SMX-7852 (manufactured by Fuji Polymer Industries Co., Ltd.) is used.

### <Sample 1-105: curable resin composition for cemented lens in comparative example (silicone-based)>

As Sample 1-105, comparative curable resin composition for cemented lens (silicone-based), VSM-4500 (manufactured by Toshiba Corporation) is used.

### <Manufacture of cemented lens>

### (Example 1-1)

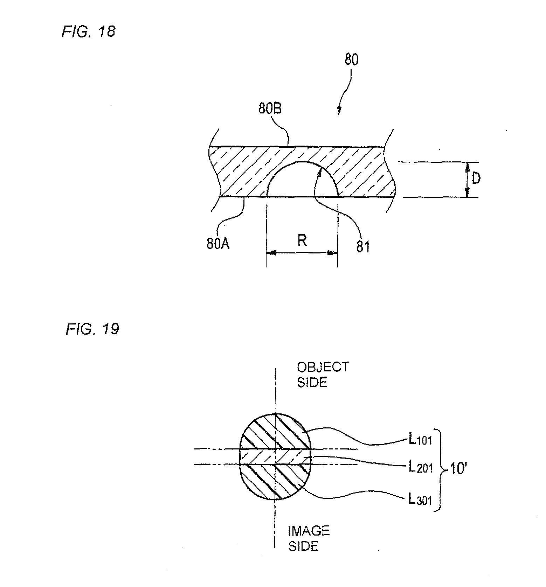

Sample 1-101 is coated on one face of optical glass BK7 (manufactured by OHARA INC.). A concavity of a form along the spherical surface of a quartz mold is pressed thereto under reduced pressure so as to exclude air bubbles. More specifically, as shown in the schematic sectional view passing the center of the concavity in Fig. 18, mold 80 provided with spherical concave surface 81 (diameter R on face 80A: 1.029 mm, center depth D: 0.0929 mm) on one face 80A is used. The obtained lens sample is irradiated with UV-ray of 40,000 mJ/cm² with high power UV-LED (UV-400) (manufactured by KEYENCE CORPORATION) from the other face 80B of the mold. By the same operation as above as to the other face of optical glass BK7 (manufactured by OHARA INC.), cemented lens 10' in Example 1-1 comprising optical glass BK7 as second lens L₂₀₁ and first lens L₁₀₁, and third lens ₃₀₁ cemented to second lens L₂₀₁, as shown in the schematic sectional view in Fig. 19, is manufactured.

### (Example 1-2)

Sample 1-101 is coated on one face of optical glass BK7 (manufactured by OHARA INC.). Concave surface 81 of mold 80 is pressed thereto under reduced pressure so as to exclude bubbles. The obtained lens sample is sufficiently irradiated with UV-ray by means of high power UV-LED (UV-400) (manufactured by KEYENCE CORPORATION) from the other face 80B of the mold. The lens sample is further heated at 150°C for 3 hours and curing reaction is terminated. By the same operation as above as to the other face of optical glass BK7 (manufactured by OHARA INC.), cemented lens 10' in Example 1-2 comprising optical glass BK7 as second lens L₂₀₁ and first lens L₁₀₁ and third lens ₃₀₁ cemented to second lens L₂₀₁ as shown in Fig. 19, is manufactured.

### (Example 1-3)

Cemented lens 10' in Example 1-3 is manufactured by performing the same operation as in Example 1-2 except for replacing sample 1-101 with sample 1-102.

### (Example 1-4)

Cemented lens 10' in Example 1-4 is manufactured by performing the same operation as in Example 1-2 except for replacing sample 1-101 with sample 1-103.

### (Comparative Example I-1)

Sample 1-104 is coated on one face of optical glass BK7 (manufactured by OHARA INC.). Concave surface 81 of mold 80 is pressed thereto under reduced pressure so as to exclude bubbles. Curing reaction is performed by heating the obtained lens sample at 150°C for 3 hours. By the same operation as above as to the other face of optical glass BK7 (manufactured by OHARA INC.), cemented lens 10' in Comparative Example 1-1 comprising optical glass BK7 as second lens L₂₀₁ and first lens L₁₀₁ and third lens ₃₀₁ cemented to second lens L₂₀₁ as shown in Fig. 19, is manufactured.

### (Comparative Example 1-2)

Cemented lens 10' in Comparative Example 1-2 is manufactured by performing the same operation as in Comparative Example 1-1 except for replacing sample 1-104 with sample 1-105.

The material, refractive index and Abbe number of each lens of the cemented lenses in Examples 1-1 to 1-4 and Comparative Examples 1-1 and 1-2 are summarized in Table 2 below.

### <Evaluation>

### (Focal length)

Each cemented lens obtained above is irradiated with UV-ray by means of high power UV-LED (UV-400) (manufactured by KEYENCE CORPORATION) from the object side to determine focal length. Taking the focal length of the cemented lens in Comparative Example 1-1 as the reference value, the ratio of each of the cemented lenses in Examples 1-1 to 1-4 and Comparative Examples 1-1 and 1-2 to the reference value is computed. The ratio less than I time (that is, the focal length smaller than that of the cemented lens in Comparative Example 1-1) is evaluated as grade A, and the ratio exceeding 1 time (that is, the focal length larger than that of the cemented lens in Comparative Example 1-1) as grade B. The results obtained are shown in Table 2 below.

### (Adhesion test: heating cycle test)

On one face of optical glass BK7 (manufactured by OHARA INC.), 25 lenses corresponding to first lens L₁₀₁ in Example 1-1 are cemented according to the method described in Example 1-1. That is, a cemented body in Example 1-1 comprising one glass substrate and 25 first lenses L₁₀₁ (convex lenses) in Example 1-1 cemented to one face of the glass substrate is manufactured.

In the same manner, cemented bodies in Examples 1-2 to 1-4 and Comparative Examples 1-1 and 1-2 are manufactured, which respectively comprise a glass substrate and 25 first lenses L₁₀₁ (convex lenses) in Example 1-2 to 1-4 and Comparative Examples 1-1 and 1-2 cemented to one face of the glass substrate.

Heating cycle of retaining each cemented body in an oven at 270°C for 10 minutes and cooling at room temperature for 30 minutes is repeated 10 times, and the number of the convex lenses peeled off is examined. The results obtained are shown in Table 2 below.

**TABLE 2**

| Example No | First Lens And Third Lens | | | | Second Lens | | | | Number of Lenses Peeled Off |
|---|---|---|---|---|---|---|---|---|---|
| | Material | Curing Method | Refractive Index | Abbe Number | Material | Refractive Index | Abbe Number | Focal Length | |
| Example 1-1 | Sample (1) (curable resin using (M-17)) | UV-ray | 1.5672 | 51.1 | | | | 0.96 times (grade A) | 1 |
| Example 1-2 | Sample (1) (curable resin using (M-17)) | UV-ray and heating | | | | | | 0.96 times (grade A) | 0 |
| Example 1-3 | Sample (2) (curable resin using (M-18)) | UV-ray and heating | 1.6050 | 22.3 | Optical Glass BK7 | 1.5168 | 64.0 | 0.94 times (grade A) | 0 |
| Example 1-4 | Sample (3) (curable resin using (M-36)) | UV-ray and heating | 1.5520 | 53.1 | | | | 0.97 times (grade A) | 0 |
| Comparative Example 1-1 | Sample (4) (silicone-based curable resin) | Heating | 1.5100 | 56.0 | | | | 1.00 time (reference) | 0 |
| Comparative Example 1-2 | Sample (5) (silicone-based curable resin) | Heating | 1.4200 | 52.0 | | | | 1.06 times (grade B) | 7 |

As is apparent from the results in Table 2, the first lenses and third lenses in cemented lenses of Examples 1-1 to 1-4 show high refractive index, and so the focal length is short as compared with those in Comparative Examples 1-1 and 1-2. Therefore, it has been found that the amount of the resin to manufacture a lens can be decreased and lightening of a lens is also possible according to the invention. (By decreasing the amount of the resin to manufacture a lens, for example, an effect that an imaging lens mounted on a portable telephone is difficultly damaged by reflowing treatment during the manufacturing process of the portable telephone can also be revealed.)

As is also apparent from Table 2, as compared with Comparative Examples 1-1 and 1-2, the number of peeled lenses of the first lenses in the cemented lenses in Examples 1-1 to 1-4 is few even in the heating cycle test at 270°C, so that adhesion to the glass material is high without using an adhesive. Accordingly, it has been found that cemented lenses excellent in adhesion between lenses and heat resistance in reflowing treatment can be obtained according to the invention.

**<Sample 2-101: second curable resin composition for a cemented lens of the invention>**

| | |
|---|---|
| · Cyclic allylsulfide compound: M-17 (synthesized product) | 50 g |
| · Radical polymerization initiator: AIBN (manufactured by Wako Pure Chemical Industries) | |
| · Organic silicon compound having one or more silicon atoms bonded to a hydrogen atom in one molecule: DMS-H31 (manufactured by Gelest Inc.) | 50 g |
| · Hydrosilylation reaction catalyst: Pt(ViMe₂SiOSiMe₂Vi) (manufactured by Sigma-Aldrich Japan) | 20 ppm in terms of mass of platinum metal atoms based on the composition |

Sample 2-101 is produced as the curable resin composition for a cemented lens of the invention by mixing the above composition in a glove box in the nitrogen atmosphere. Further, Samples 2-102 to 2-106 are prepared by replacing each of the cyclic allylsulfide compound and the polymerization initiator as shown in Table 3 below in an equivalent mass.

**TABLE 3**

| Sample No. | Cyclic Allylsulfide Compound | Radical Polymerization Initiator | Organic Silicon Compound | Hydrosilylation Reaction Catalyst |
|---|---|---|---|---|
| 2-101 | M-17 | AIBN | DMS-H31 | Pt(ViMe₂SiOSiMe₂Vi) |
| 2-102 | M-36 | AIBN | DMS-H31 | Pt(ViMe₂SiOSiMe₂Vi) |
| 2-103 | MD-1 | AIBN | DMS-H31 | Pt(ViMe₂SiOSiMe₂Vi) |
| 2-104 | M-17 | CI-HABI | DMS-H31 | Pt(ViMe₂SiOSiMe₂Vi) |
| 2-105 | M-17 | I-8 | DMS-H31 | Pt(ViMe₂SiOSiMe₂Vi) |
| 2-106 | M-36 | I-8 | DMS-H31 | Pt(ViMe₂SiOSiMe₂Vi) |

CI-HABI: 2,2'-bis(o-chlorophenyl)-4,4',5,5'-tetraphenyl-1,1'-biimidazole

**<Sample 2-107: preparation of curable resin composition for cemented lens in comparative example>**

| | |
|---|---|
| · Organic silicon compound having one or more silicon atoms bonded to a hydrogen atom in one molecule: DMS-H31 (manufactured by Gelest Inc.) | 40 g |
| · Organic silicon compound having one or more silicon atoms bonded to a vinyl group in one molecule: DMS-V31 (manufactured by Gelest Inc.) | 60 g |
| · Hydrosilylation reaction catalyst: Pt(ViMe₂SiOSiMe₂Vi) (manufactured by Sigma-Aldrich Japan) on the composition | 20 ppm in terms of mass of platinum metal atoms based |

Sample 2-107 is produced as the curable resin composition for a cemented lens of a comparative example by mixing the above composition in a glove box in the nitrogen atmosphere.

### <Manufacture of cemented lens>

### (Example 2-1)

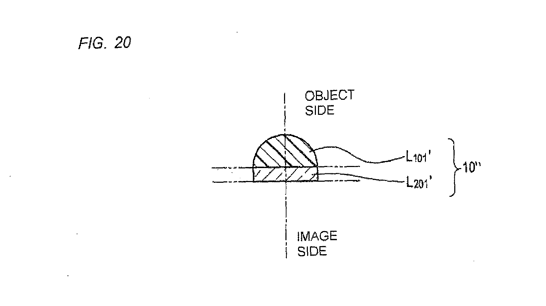

Sample 2-101 is coated on one face of optical glass BK7 (manufactured by OHARA INC.). A concavity of a form along the spherical surface of a quartz mold is pressed thereto under reduced pressure so as to exclude air bubbles. More specifically, as shown in the schematic sectional view passing the center of the concavity in Fig. 18, mold 80 provided with hemispheric concave surface 81 (diameter R on face 80A: 1.029 mm, center depth D: 0.0929 mm) on one face 80A is used. Then, the obtained lens sample is stepwise heated at 100°C for 1 hour, at 150°C for 1 hour, and at 184°C for 1 hour, and thus cemented lens 10" in Example 2-1 comprising optical glass BK7 as second lens L_{201'} and first lens L_{101'} cemented to second lens L_{201'}, as shown in the schematic sectional view in Fig. 20, is manufactured.

### (Example 2-2)

Cemented lens 10" in Example 2-2 is manufactured by performing the same operation as in Example 2-1 except for replacing sample 2-101 with sample 2-102.

### (Example 2-3)

Cemented lens 10" in Example 2-3 is manufactured by performing the same operation as in Example 2-1 except for replacing sample 2-101 with sample 2-103.

### (Example 2-4)

Sample 2-104 is coated on one face of optical glass BK7 (manufactured by OHARA INC.). Concave surface 81 of mold 80 is pressed thereto under reduced pressure so as to exclude bubbles. The obtained lens sample is irradiated with UV-ray of 40,000 mJ/cm² by means of high power UV-LED (UV-400) (manufactured by KEYENCE CORPORATION) from the other face 80B of the mold. In the next place, the lens sample is stepwise heated at 15D°C for 1 hour and at 180°C for 1 hour, and thus cemented lens 10" in Example 2-4 comprising optical glass BK7 as second lens L_{201'} and first lens L_{101'} cemented to second lens L_{201'}, as shown in Fig. 20, is manufactured.

### (Example 2-5)

Cemented lens 10" in Example 2-5 is manufactured by performing the same operation as in Example 2-4 except for replacing sample 2-104 with sample 2-105.

### (Example 2-6)

Cemented lens 10" in Example 2-6 is manufactured by performing the same operation as in Example 2-4 except for replacing sample 2-104 with sample 2-106.

### (Comparative Example 2-1)

Cemented lens 10" in Comparative Example 2-1 is manufactured by performing the same operation as in Example 2-4 except for replacing sample 2-104 with sample 2-107.

### <Evaluation>

### (Flowability of curable resin composition (before curing))

A sample obtained by coating sample 2-101 at 25°C on one face of optical glass BK7 (manufactured by OHARA INC.) is tilted from the horizontal to 90°. A sample having high flowability is evaluated as grade A, low flowability as grade B, and little flowability as grade C. The same tests and evaluations are carried out by replacing sample 2-101. with each of samples 2-102 to 2-107. The results obtained are shown in Table 4 below.

### (Cured state of cured resin (after curing))

A piece of PET (500 µm × 1 cm × 1 cm) is pressed against each first lens L_{101'} of cemented lenses 10" in Examples 2-1 to 2-6 and Comparative Example 2-1, and the presence of tacky feeling is evaluated. More specifically, a lens the surface of which is hard and free of tackiness is evaluated as grade A, a lens whose surface is a little tacky as grade B, and a lens showing flowability is evaluated as C. The results obtained are shown in Table 4 below.

### (Focal length)

Each cemented lens obtained above is irradiated with UV-ray by means of high power UV-LED (UV-400) (manufactured by KEYENCE CORPORATION) from the object side to determine focal length. Taking the focal length of the cemented lens in Comparative Example 2-1 as the reference value, the ratio of each of the cemented lenses in Examples 2-1 to 2-6 to the reference value is computed. The ratio less than 1 time (that is, the focal length smaller than that of the cemented lens in Comparative Example 2-1) is evaluated as grade A, and the ratio exceeding 1 time (that is, the focal length larger than that of the cemented lens in Comparative Example 2-1) as grade B. The results obtained are shown in Table 4 below.

### (Adhesion test: heating cycle test)

On one face of optical glass BK7 (manufactured by OHARA INC.), 25 lenses corresponding to first lens L_{101'} in Example 2-1 are cemented according to the method described in Example 2-1. That is, a cemented body in Example 2-1 comprising one glass substrate and 25 first lenses L_{101'} (convex lenses) in Example 2-1 cemented to one face of the glass substrate is manufactured.

In the same manner, cemented bodies in Examples 2-2 to 2-6 and Comparative Example 2-1 are manufactured, which respectively comprise a glass substrate and 25 first lenses L_{101'} (convex lenses) in Example 2-2 to 2-6 and Comparative Example 2-1 cemented to one face of the glass substrate.

Heating cycle of retaining each cemented body in an oven at 270°C for 10 minutes and cooling at room temperature for 30 minutes is repeated 10 times, and the number of the convex lenses peeled off is examined. The results obtained are shown in Table 4 below.

**TABLE 4**

| Curable Composition curing) | Resin (before | Cured Resin (after curing) | | | |
|---|---|---|---|---|---|
| Sample No. | Flowability | Example No. | Cured State | Focal Length | Number of Lenses Peeled Off (heating cycle test) |
| 2-101 | A | Example 2-1 | B | A | 1 |
| 2-102 | A | Example 2-2 | B | A | 0 |
| 2-103 | B | Example 2-3 | B | A | 0 |
| 2-104 | A | Example 2-4 | A | A | 0 |
| 2-105 | A | Example 2-5 | B | A | 0 |
| 2-106 | A | Example 2-6 | B | A | 0 |
| 2-107 | C | Comparative Example 2-1 | B | Reference | 5 |

As is apparent from the results in Table 4, as compared with comparative sample 2-107, samples 2-101 to 2-106 according to the invention are high in flowability before curing. Further, samples 2-101 to 2-106 of the invention show a good cured state of cured resins after curing (that is, the degree of curing is high). Accordingly, it has been found that in the method of manufacturing a cemented lens by curing a curable resin composition in a mold as described above, the curable resin composition of the invention is high in followability to the shape of a mold before curing and the obtained desired shape is not liable to be deformed after curing, and so a cemented lens of a desired shape can be manufactured very accurately.

As is apparently understood from Table 4, as compared with Comparative Example 2-1, the first lenses in the cemented lenses of Examples 2-1 to 2-6 show high refractive index, and, as a result, the focal length is short. Therefore, it has been found that the amount of the resin to manufacture a lens can be decreased and lightening of a lens is also possible according to the invention. (By decreasing the amount of the resin to manufacture a lens, for example, an effect that an imaging lens mounted on a portable telephone is difficultly damaged by reflowing treatment during the manufacturing process of the portable telephone can also be revealed.)

As is also apparent from Table 4, as compared with Comparative Example 2-1, the number of peeled lenses of the first lenses in the cemented lenses in Examples 2-1 to 2-6 is few even in the heating cycle test at 270°C, so that adhesion to the glass material is high without using an adhesive. Accordingly, it has been found that cemented lenses excellent in adhesion between lenses and heat resistance in reflowing treatment can be obtained according to the invention.

### (Evaluation of water absorption rate)

A curable resin composition (sample 2-108) obtained by dissolving 0.1 g of AIBN in 5 g of M-17 is subjected to thermal radical polymerization, whereby the polymer of a cyclic allylsulfide compound (Example 2-7) is obtained.

From each of first lenses L_{101'} of Examples 2-1, 2-4, and Comparative Example 2-1, and the polymer of the cyclic allylsulfide compound in the reference example, 0.2 g of cured resin is weighed out and allowed to stand in a thermostatic camber at 25°C 85% RH for 3 weeks, and the water absorption rate of each sample is measured with a Karl Fischer's moisture meter (AQ-2100ST, manufactured by Hiranuma Sangyo Co., Ltd.). The results obtained are shown in Table 5 below.

**TABLE 5**

| Sample No. (curable resin composition) | Cured Resin (after curing) | Water Absorption Rate (%) |
|---|---|---|
| 2-101 | Example 2-1 | 0.05 |
| 2-104 | Example 2-4 | 0.04 |
| 2-107 | (Comparative Example 2-1 (silicone resin) | 0.13 |
| 2-108 | Example 2-7 (polymer of cyclic allylsulfide compound (M-17)) | 0.04 |

As is apparent from the results in Table 5, although the ratio of silicone portion (a portion introduced from a silicon compound by hydrosilylation reaction) which is thought to increase water absorption is large (about 50% by mass), the water absorption rates in Examples 2-1 and 2-4 are equivalent to that of the polymer of cyclic allylsulfide compound in Example 2-7 not having a silicone portion, which are very small values. Therefore, a cemented lens low in water absorption can be obtained according to the invention.

### [Industrial Applicability]

The invention can provide a curable resin composition for a cemented lens capable of manufacturing a cemented lens excellent in adhesion between lenses and heat resistance at a temperature of 260°C or higher in reflowing treatment and capable of manufacturing a cemented lens having desired shapes with high accuracy, and further, capable of reducing manufacturing costs of the lens and capable of lightening lenses.

Further, the invention can provide an imaging lens equipped with a cemented lens excellent in adhesion between lenses and heat resistance at a temperature of 260°C or higher in refl owing treatment.

Still further, the invention can provide a method capable of manufacturing a number of imaging lenses equipped with cemented lenses having the above advantages at low manufacturing costs.

While the invention has been described in detail and with reference to specific embodiments thereof, it will be apparent to one skilled in the art that various changes and modifications can be made therein without departing from the spirit and scope thereof.

This application is related to Japanese Patent Application No. 2009-069932 filed on March 23, 2009, and Japanese Patent Application No. 2009-069936 filed on March 23,2009, and the disclosures of which are incorporated by reference herein.

### Description of Reference Numerals and Signs

10, 10', 10", 11,12, 13, 14, 15: Cemented lens
20, 20': Glass substrate (first substrate)
20A, 20A': Face (one face of the first substrate)
20B, 20B': Face (other face of the first substrate)
21: Pit (first pit)
21': Pit (second pit)
30: Plate member (first copying jig)
31: Protrusion (transfer part)
40: Curable resin composition for cemented lens
50, 60: Cemented body
70: Glass substrate (plate member)
100, 100', 101, 102,103,104, 105: Imaging lens
L₁₁, L₁₂, L₁₃, L₁₄, L₁₅, L₁₆, L₁₀₁, L_{101'}: First lens
L₂₁, L₂₂, L₂₃, L₂₀₁, L_{201'}: Second lens
L₃₁, L₃₂, L₃₃, L₃₀₁: Third lens
R: Region

## Claims

1. A curable resin composition for a cemented lens, comprising:
(a) a compound represented by the following formula (1), and
(b) a radical polymerization initiator: 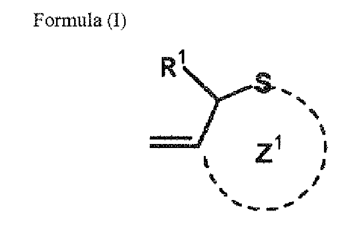 wherein R¹ represents a hydrogen atom or an alkyl group; and Z¹ represents a cyclic structure together with the two carbon atoms and the sulfur atom.

2. The curable resin composition for a cemented lens as claimed in claim I, further comprising (c) an organic silicon compound having one or more silicon atoms bonded to a hydrogen atom in one molecule.

3. The curable resin composition for a cemented lens as claimed in claim 1 or 2, wherein the compound represented by formula (I) is a compound represented by the following formula (II): 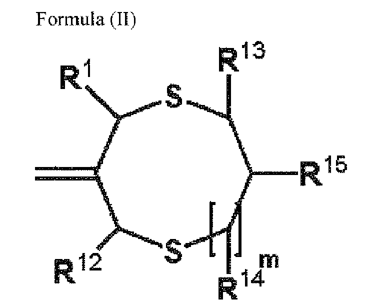 wherein R¹ has the same meaning as defined in formula (I); R¹² represents a hydrogen atom or an alkyl group; each of R¹³, R¹⁴ and R¹⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and m represents 0 or 1.

4. The curable resin composition for a cemented lens as claimed in claim 3, wherein each of R¹ and R¹² in formula (II) independently represents a hydrogen atom or a methyl group; and each of R¹³, R¹⁴ and R¹⁵ independently represents a hydrogen atom, an alkyl group, an aryl group, an alkoxy group, an aryloxy group, an alkoxycarbonyl group, an aryloxycarbonyl group, an acyloxy group, an arylearbonyloxy group, an acylamino group, an amino group, or an acyl group.

5. The curable resin composition for a cemented lens as claimed in claim 3, wherein each of R¹ and R¹² in formula (II) represents a hydrogen atom; each of R¹³, R¹⁴ and R¹⁵ independently represents a hydrogen atom, an alkyl group, an aryl group, an alkoxy group, an aryloxy group, an acyloxy group, or an aryicarbonyloxy group; and m represents 1.

6. The curable resin composition for a cemented lens as claimed in claim 1 or 2, wherein the compound represented by formula (I) is a compound represented by the following formula (III): 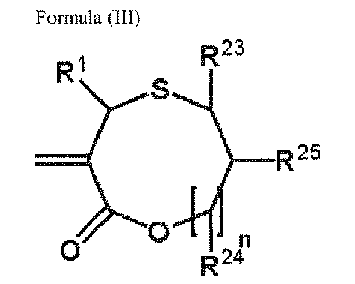 wherein R¹ has the same meaning as defined in formula (I); each of R²³, R²⁴ and R²⁵ independently represents a hydrogen atom, an alkyl group, an aryl group, a heterocyclic group, an alkoxy group, an aryloxy group, an alkylthio group, an arylthio group, an alkoxycarbonyl group, an aryloxycarbonyl group, an acyloxy group, an arylcarbonyloxy group, an acylamino group, a sulfonylamino group, an amino group, an acyl group, or a halogen atom; and n represents 0 or 1.

7. The curable resin composition for a cemented lens as claimed in claim 6, wherein R¹ in formula (III) represents a hydrogen atom or a methyl group; and each of R²³, R²⁴ and R²⁵ independently represents a hydrogen atom, an alkyl group, an aryl group, an alkoxy group, an aryloxy group, an alkoxycarbonyl group, an aryloxycarbonyl group, an acyloxy group, an arylcarbonyloxy group, an acylamino group, an amino group, or an acyl group.

8. The curable resin composition for a cemented lens as claimed in claim 6, wherein R¹ in formula (III) represents a hydrogen atom or a methyl group; each of R²³, R²⁴ and R²⁵ independently represents a hydrogen atom, an alkyl group, an aryl group, an alkoxy group, an aryloxy group, an acyloxy group, or an arylcarbonyloxy group; and n represents 0.

9. The curable resin composition for a cemented lens as claimed in any one of claims 2 to 8, wherein the component (c) contains an organic silicon compound having two or more silicon atoms bonded to a hydrogen atom in one molecule.

10. The curable resin composition for a cemented lens as claimed in any one of claims 2 to 8, further comprising (d) a hydrosilylation reaction catalyst.

11. An imaging lens comprising a cemented lens that comprises a first lens and a second lens cemented to the first lens, wherein the first lens and the second lens are arrayed from the object side toward the image side, the first lens is formed from a curable resin composition for a cemented lens described in any one of claims 1 to 10, and the second lens is formed from a glass material.

12. The imaging lens as claimed in claim 11, wherein the second lens is a plane parallel glass plate, and the first lens is a plano-convex lens whose object side surface is convex toward to the object side.

13. The imaging lens as claimed in claim 11, wherein the second lens is a plane parallel glass plate, and the first lens is a plano-concave lens whose object side surface is concave toward to the object side.

14. The imagine lens as claimed in claim 11, wherein the second lens is a biconvex glass plate, and the first lens is a lens whose object side surface is convex toward the object side.

15. The imaging lens as claimed in claim 11, wherein the second lens is a biconvex glass plate, and the first lens is a lens whose object side surface is concave toward the object side.

16. The imaging lens as claimed in claim 11, wherein the second lens is a biconcave glass plate, and the first lens is a lens whose object side surface I convex toward the object side.

17. The imaging lens as claimed in claim 11, wherein the second lens is a biconcave glass plate, and the first lens is a lens whose object side surface is concave toward the object side.

18. The imaging lens as claimed in any one of claims 11, 14 to 17, wherein the cemented lens further comprises a third lens cemented to the second lens on the image side of the second lens, and the third lens is formed from a curable resin composition for a cemented lens described in any one of claims 1 to 10.

19. The imaging lens as claimed in claim 18, wherein the third lens is a lens having a convex surface on the image side of the third lens.

20. The imaging lens as claimed in claim 12 or 13, wherein the cemented lens further comprises a third lens on the image side of the second lens, and the third lens is formed from the curable resin composition for a cemented lens described in any one of claims 1 to 10, and is a plano-convex lens having a convex surface on the image side of the third lens.

21. The imaging lens as claimed in claim 18, wherein the object side surface of the first lens and the image side surface of the third lens are aspheric surfaces.

22. The imaging lens as claimed in claim 18, wherein at least one surface of the second lens is subject to coating treatment.

23. A method for manufacturing an imaging lens comprising a cemented lens that comprises a first lens and a second lens cemented to the first lens, the method comprising:
a step of preparing a first substrate having a plurality of first pits on one surface thereof, and a first copying jig having a plurality of transfer parts capable of entering the plurality of the first pits respectively, and arranging a curable resin composition for a cemented lens described in any one of claims 1 to 10 between the first pits of the first substrate and the transfer parts of the first copying jig;
a step of transferring shapes of the transfer parts of the first copying jig to the curable resin composition for the cemented lens by abutting the first copying jig on the one surface of the first substrate;
a step of manufacturing the first lens by curing the curable resin composition for the cemented lens,
a step of relatively releasing the first copying jig from the first substrate to manufacture a cemented body having the first substrate and a plurality of first lenses; and
a step of forming the cemented lens by cutting the cemented body in a thickness direction such that a region containing each of the plurality of first lenses is segmented to obtain the second lens cemented to the first lens from the first substrate.

24. The method for manufacturing an imaging lens comprising the cemented lens that further comprises a third lens cemented to the second lens, as claimed in claim 23,
the method comprising further forming a plurality of second pits on positions of the other surface of the first substrate, the positions corresponding to the plurality of the first pits respectively, and
the method further comprising, before the step of cutting the cemented body in the thickness direction,
a step of preparing a second copying jig having a plurality of transfer parts capable of entering the plurality of the second pits respectively, and arranging a curable resin composition for a cemented lens described in any one of claims I to 10 between the second pits of the first substrate and the transfer parts of the second copying jig;
a step of transferring shapes of the transfer parts of the second copying jig to the curable resin composition for the cemented lens by abutting the second copying jig on the other surface of the first substrate;
a step of manufacturing the third lens by curing the curable resin composition for the cemented lens; and
a step of relatively releasing the second copying jig from the first substrate to form further a plurality of third lenses on the cemented body,
wherein region containing each of the plurality of first lenses further contains the corresponding third lens.

25. The method for manufacturing an imaging lens as claimed in claim 23 or 24, wherein the cemented body further has a plate member cemented to a surface on a first lens side of the cemented body.

26. The method for manufacturing an imaging lens as claimed in any one of claims 23 to 25, wherein the step of curing the curable resin composition for the cemented lens includes a step of irradiating with light.

27. The method for manufacturing an imaging lens as claimed in any one of claims 23 to 25, wherein the step of curing the curable resin composition for the cemented lens includes step of heating.

28. The method for manufacturing an imaging lens as claimed in any one of claims 23 to 25, wherein the step of curing the curable resin composition for the cemented lens includes a step of irradiating with light and a step of heating.
